# EUROPEAN PATENT SPECIFICATION

(11) **EP 3 216 679 B1**
(45) Date of publication and mention of the grant of the patent: **28.11.2018**
(21) Application number: 17000352.9
(22) Date of filing: 06.03.2017
(51) Int. Cl.: B62D 49/06, A01D 46/20, A01D 46/28, B62D 53/00, B62D 55/02, B62D 61/00, B62D 1/00, B62D 1/02, A01B 75/00, A01D 46/24

(54) **MOBILE VEHICLE**
MOBILES FAHRZEUG
VÉHICULE MOBILE

(30) Priority: 07.03.2016 JP 2016043571
(43) Date of publication of application: 13.09.2017
(73) Proprietor: Yanmar Co., Ltd., Osaka 530-8311 (JP)
(72) Inventor: Moriguchi, Kazuma, Osaka-shi Osaka, 530-8311 (JP)
(74) Representative: Hering, Hartmut

(56) References cited:
- FR-A1- 2 788 404
- FR-A5- 2 238 349
- JP-A- H07 231 712
- US-A- 3 236 329
- US-B1- 8 522 901

## Description

### Technical Field

The present invention relates to a mobile vehicle. More specifically, the present invention relates to a mobile vehicle including a steering wheel attached to a steering shaft at a front portion and a steering wheel attached to a steering shaft at a rear portion.

### Background Art

Conventionally, the harvest of fruits, such as grapes, pears, strawberries, tomatoes, or cherries, being crops, is performed by handpicking of a worker in order to retain the quality favorable with prevention of the blemish of the fruits. Harvest operation by the handpicking of the worker in this manner, is performed moving in a field. When the fruits grow at a low position, such as a position lower than the waist of the worker, the worker leans down to handpick the fruits. Therefore, the worker continuously performs the leaning action and the movement, so that the burden of the worker may be considerably large. Fruit trees are generally cultivated in a precipitous terrain so that labor necessary for the movement may be large. Thus, a mobile vehicle for reducing the load of the worker during the harvest operation by the handpicking, has been proposed.

For example, Patent Literature 1 discloses the following truck for under-trellis work. An engine that drives traveling devices and an operation unit having various operation levers for selecting various traveling modes of the traveling devices, are provided on one side of an upper portion of a truck frame including the traveling devices provided on the lower side. In addition, a loading platform is mounted on the other side of the upper portion of the truck frame, and a work seat is provided movable to an upper portion of the loading platform.
Moreover, Patent Literature 2 discloses a mobile vehicle according to the preamble of independent claim 1.

### Citation List

### Patent Literature

Patent Literature 1: JP H07-231712 A
Patent Literature 2: US 3 236 329 A

### Summary of Invention

### Technical Problem

According to the configuration described in Patent Literature 1, work can be performed retaining a comfortable sitting position, and additionally the work seat can be moved retaining the sitting position so that a work range within arm's reach can be expanded retaining the sitting position and the efficiency of the work can improve.

Here, work of picking a fruit being a crop planted with branches trained against a trellis formed in a field, from the lower side of the trellis, is considered, in the truck in Patent Literature 1. However, work of picking the fruit being the crop planted in rows, from the side, is not considered at all. For a crop planted in rows, such as grapes being the raw material of wine, the width between the rows adjacent to each other (a furrow), is sometimes made as narrow as workers can pass each other, in terms of the efficiency of production so that it is difficult to introduce a large-size machine in such a field.

Thus, an object of the present invention is to provide a mobile vehicle that travels furrows with the operation posture of a worker in a sitting position, being retained, and also reduces the load of the worker during harvest operation by handpicking.

### Solution to Problem

In order to solve the problem, a mobile vehicle of the present invention includes
a body frame;
two steering wheels;
a seat; and
two steps on which a worker individually puts left and right feet of the worker, wherein
one of the steering wheels is provided to a front portion of the body frame and the other is provided to a rear portion,
the seat is provided to an upper portion of the body frame between the steering wheels,
the two steps are provided on one side of the body frame, and
one of the two steps is configured to operate the steering wheels.

Further, the mobile vehicle may include
a power source; and
a traveling device configured to drive with power of the power source, wherein
the traveling device is provided to the body frame between the steering wheels.

Still further, the mobile vehicle may include
an auxiliary wheel on at least one of sides of the body frame.

Still further, the auxiliary wheel may be attached to the body frame through a linkage, and
the linkage may include an extendable and contractible connecting member having one end connected to the body frame and the other end connected to the auxiliary wheel.

Still further, at least one of the two steps may be configured to perform a speed change operation of the mobile vehicle.

Still further, the two steps may be switchable such that one of the two steps operates the steering wheel.

Still further, the mobile vehicle may include a seat position adjustment device configured to lift the seat up and down or incline the seat with respect to the body frame.

Still further, the mobile vehicle may include a load sensor configured to detect the weight shift of the worker, and
the seat position adjustment device may be configured to operate based on the detection value of the load sensor.

Still further, the mobile vehicle may include a seat post including a grip and protruding from a seating face of the seat, and
the seat post may be configured to retain buttocks of the worker to be interposed in riding.

Still further, the seat post may be detachably attached to the seat.

Still further, the mobile vehicle may include
a supporting frame,
a cable being connectable to an external power source, and
a connector being able to supply power to the outside, wherein
the supporting frame may extend upward from the body frame so as to exceed an upper end of a crop,
the cable may extend from an upper portion of the supporting frame, and
the connector may be provided to the upper portion of the supporting frame.

Still further, the mobile vehicle may include
an un-harvest determination device configured to determine whether an unharvested object is present, and
an alarm, wherein
the alarm may be configured to operate when the un-harvest determination device determines that the unharvested object is present.

Still further, the mobile vehicle may include a collecting apparatus connected to the body frame and configured to collect harvested objects, wherein
the collecting apparatus may include a plurality of containers, a truck having wheels, and a conveying apparatus,
the plurality of containers may be configured to house the harvested objects by the worker,
the truck may be connected detachably to the body frame and configured to collect the harvested objects that have been housed in the containers, and
the conveying apparatus may be configured to convey the containers to circle in a front and rear direction above the truck and to transfer the harvested objects that have been housed in the containers to the truck.

Still further, the mobile vehicle may include a handle and two auxiliary steps, wherein
the handle may be detachably connected to a steering shaft of the steering wheel provided to a front portion of the body frame and configured to operate the steering wheel, and
the two auxiliary steps may protrude outward from both side portions of the body frame, respectively.

Still further, the handle may include a foldable rod-shaped handle shaft and two handle levers,
the handle shaft may include one end detachably connected to the steering shaft of the steering wheel provided to the front portion of the body frame,
the two handle levers may be connected to the other end of the handle shaft and protrude to both sides of the body frame, respectively,
the two handle levers may be foldable along the handle shaft,
the two auxiliary steps may be foldable along the side portions of the body frame, respectively, and
the body frame may include a retaining portion that retains the handle shaft that has been folded.

Still further, the mobile vehicle may be configured to travel autonomously or to be controlled remotely.

### Advantageous Effects of Invention

An embodiment of the present invention provides a mobile vehicle including a body frame, two steering wheels, a seat, and two steps on which a worker individually puts left and right feet of the worker. One of the steering wheels is provided to a front portion of the body frame and the other is provided to a rear portion, the seat is provided to an upper portion of the body frame between the steering wheels, the two steps are provided on one side of the body frame, and one of the two steps is configured to operate the steering wheels. According to the embodiment of the present invention, it is possible to provide the mobile vehicle that travels between furrows with an operation posture of the worker in a sitting position remaining and reduces the load of the worker during harvest operation by handpicking.

Further, the mobile vehicle may include a power source and a traveling device configured to drive with power of the power source. The traveling device may be provided to the body frame between the steering wheels. Accordingly, it is possible to further reduce the load of the worker during the harvest operation by the handpicking and it is possible to improve the stability of the mobile vehicle.

Still further, the mobile vehicle may include an auxiliary wheel on at least one of sides of the body frame so that it is possible to improve the stability of the mobile vehicle.

Still further, the auxiliary wheel may be attached to the body frame through a linkage, and the linkage may include an extendable and contractible connecting member having one end connected to the body frame and the other end connected to the auxiliary wheel. Accordingly, it is possible to further improve the stability of the mobile vehicle.

Still further, at least one of the two steps may be configured to perform a speed change operation of the mobile vehicle. Accordingly, the worker can perform the traveling operation of the mobile vehicle without using his/her hands so that the usability may be satisfactory and it is possible to improve the efficiency of the harvest operation by the handpicking.

Still further, the two steps may be switchable such that one of the two steps operates the steering wheel. Accordingly, it is possible to select the step that perform the steering operation, in response to the dominant leg of the worker or a switch between forward movement and backward movement, so that the usability may be satisfactory.

Still further, the mobile vehicle may include a seat position adjustment device configured to lift the seat up and down or incline the seat with respect to the body frame. Accordingly, it is possible to vary the position or the slant of the seat in response to the body of the worker or a position at which objects to be harvested grow. Thus, the worker can have a posture for easily performing the harvest operation so that the usability may be satisfactory.

Still further, the mobile vehicle may include a load sensor configured to detect the weight shift of the worker. The seat position adjustment device may be configured to operate based on the detection value of the load sensor. Accordingly, the worker can vary the height or the slant of the seat without using his/her hands so that the usability may be satisfactory and it is possible to improve the efficiency of the harvest operation by the handpicking.

Still further, the mobile vehicle may include a seat post including a grip and protruding from a seating face of the seat. The seat post may be configured to retain buttocks of the worker to be interposed in riding. Accordingly, the worker can take a stable sitting position with the simple configuration and it is possible to improve the efficiency of the harvest operation by the handpicking. The worker can grip the grip and thus the worker can retain the sitting position even when the mobile vehicle considerably joggles.

Still further, the seat post may be detachably attached to the seat. Accordingly, the use application of the mobile vehicle can expand and, for example, the mobile vehicle can be used as a conveying vehicle that conveys harvested objects so that the usability may be satisfactory.

Still further, the mobile vehicle may include a supporting frame, a cable being connectable to an external power source, and a connector being able to supply power to the outside. The supporting frame may extend upward from the body frame so as to exceed an upper end of a crop. The cable may extend from an upper portion of the supporting frame. The connector may be provided to the upper portion of the supporting frame. Accordingly, the weight saving and the compactification can be achieved so that the continuous operation can be performed for a prolonged time. In performing the harvest operation with a plurality of the mobile vehicles, the plurality of the mobile vehicles can be sequentially coupled to the external power source so that the routing of the cables may be prevented from being complicated and the harvest operation can be favorably performed. The work can be performed at positions apart from the external power source being a noise source so that workers can easily communicate with each other during the harvest operation.

Still further, the mobile vehicle may include an un-harvest determination device configured to determine whether an unharvested object is present, and an alarm. The alarm may be configured to operate when the un-harvest determination device determines that the unharvested object is present. Accordingly, the worker can prevent the occurrence of the unharvested object, without paying a great deal of attention, and it is possible to improve the efficiency of the harvest operation by the handpicking.

Still further, the mobile vehicle may include a collecting apparatus connected to the body frame and configured to collect harvested objects. The collecting apparatus may include a plurality of containers, a truck having wheels, and a conveying apparatus. The plurality of containers may be configured to house the harvested objects by the worker. The truck may be connected detachably to the body frame and configured to collect the harvested objects that have been housed in the containers. The conveying apparatus may be configured to convey the containers to circle in a front and rear direction above the truck and to transfer the harvested objects that have been housed in the containers to the truck. Accordingly, the collection of the harvested objects can be easily performed and it is possible to improve the efficiency of the harvest operation by the handpicking. In addition, the harvested objects can be prevented from being blemished so that the quality can remains favorable.

Still further, the mobile vehicle may include a handle and two auxiliary steps. The handle may be detachably connected to a steering shaft of the steering wheel provided to a front portion of the body frame and configured to operate the steering wheel. The two auxiliary steps may protrude outward from both side portions of the body frame, respectively. Accordingly, the traveling for a purpose other than harvest operation can be facilitated so that the usability may be satisfactory.

Still further, the handle may include a foldable rod-shaped handle shaft and two handle levers. The handle shaft may include one end detachably connected to the steering shaft of the steering wheel provided to the front portion of the body frame. The two handle levers may be connected to the other end of the handle shaft and protrude to both sides of the body frame, respectively. The two handle levers may be foldable along the handle shaft. The two auxiliary steps may be foldable along the side portions of the body frame, respectively. The body frame may include a retaining portion that retains the handle shaft that has been folded. Accordingly, the handle can be folded and housed and the harvest operation is not interrupted so that the usability may be satisfactory.

Still further, the mobile vehicle may be configured to travel autonomously or to be controlled remotely. Accordingly, the use application of the mobile vehicle can expand and, for example, the mobile vehicle can be used as a conveying vehicle that conveys harvested objects so that the usability may be satisfactory.

### Brief Description of Drawings

Fig. 1 is a schematic side view illustrating a mobile vehicle as an example of an embodiment of the present invention.
Fig. 2 is a schematic plan view of the mobile vehicle of Fig. 1.
Fig. 3 is a schematic plan view illustrating a configuration of a steering linkage.
Figs. 4A and 4B are schematic plan views illustrating the operation of the steering linkage, Fig. 4A illustrate a state of the steering linkage at the time of right turning, and Fig. 4B illustrate one at the time of left turning.
Fig. 5 is a schematic plan view illustrating an example of a farm land where grapes as an example of crops are planted.
Fig. 6 is a schematic side view of one fence of grapes illustrated in order to describe a planting condition of grapes.
Fig. 7 is a schematic side view illustrating an example of a different use of the mobile vehicle according to the present embodiment.
Fig. 8 is a schematic side view illustrating an example of a mobile vehicle according to another embodiment.
Fig. 9 is a schematic plan view of the mobile vehicle of Fig. 8.
Fig. 10 is a schematic plan view illustrating an example of a harvest operation.
Fig. 11 is a schematic side view illustrating an example of a mobile vehicle according to another embodiment.
Fig. 12 is a schematic side view illustrating an example of a mobile vehicle according to another embodiment.
Fig. 13 is a schematic side view illustrating an example of a traveling state of the mobile vehicle according to another embodiment.
Fig. 14 is a schematic side view illustrating an example of a mobile vehicle according to another embodiment.
Fig. 15 is a schematic side view illustrating an example of a traveling state of the mobile vehicle according to another embodiment.
Fig. 16 is a schematic side view illustrating an example of a mobile vehicle according to another embodiment.
Figs. 17A and 17B are schematic views illustrating an example of a handle included in the mobile vehicle according to another embodiment, and Figs. 17A and 17B illustrate a state before the handle levers are folded and a state after the handle levers are folded, respectively.
Fig. 18 is a schematic side view illustrating an example of a state where the handle and auxiliary steps of the mobile vehicle according to another embodiment have been folded.
Fig. 19 is a schematic front view illustrating an example of another handle.
Fig. 20 is a schematic front view illustrating an example of a state where handle levers of the handle of Fig. 19 have been folded.

### Description of Embodiments

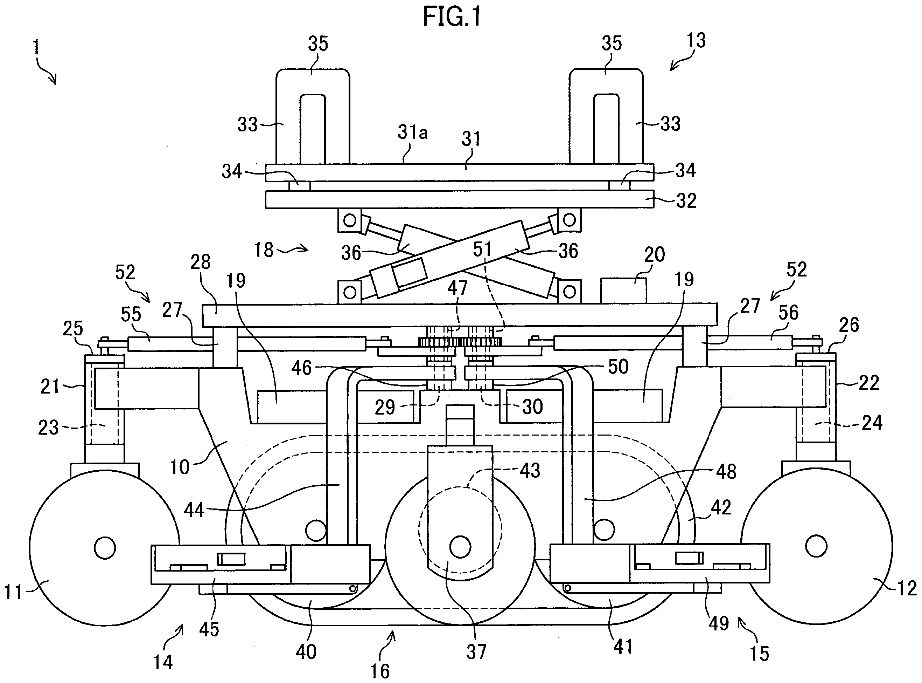

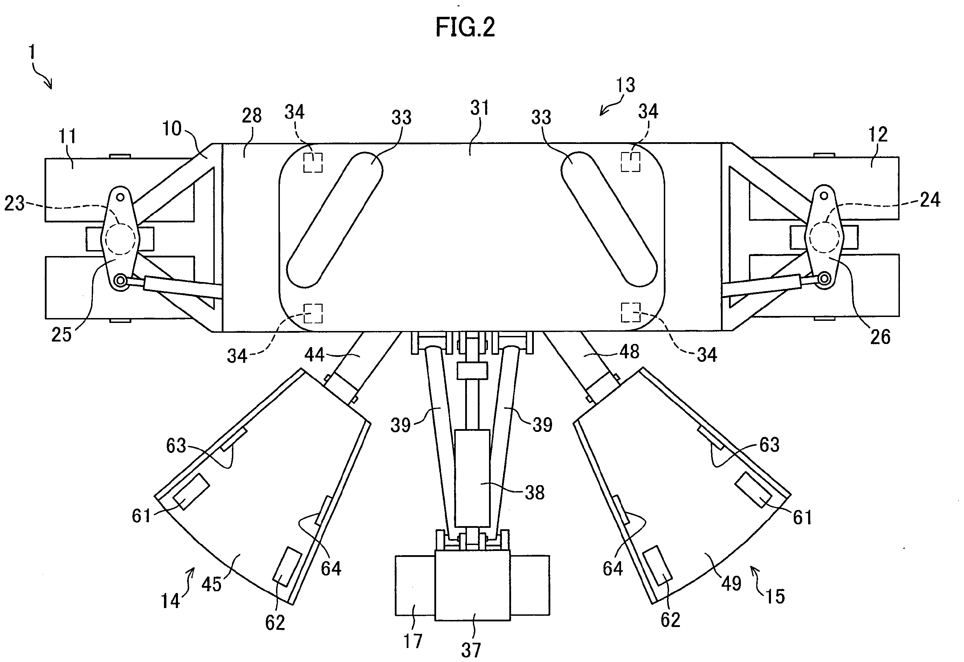

Embodiments of the present invention will be described in detail below with reference to the drawings. Fig. 1 is a schematic side view illustrating a mobile vehicle as an example of an embodiment of the present invention. Fig. 2 is a schematic plan view of the mobile vehicle 1 of Fig. 1. Note that, for convenience of the descriptions, a left side in Fig. 1 will be referred to as a front forward direction, a deep side of Fig. 1 perpendicular and horizontal to the front forward direction will be referred to as a right direction, the other side is referred to as a left direction, an upper side in Fig. 1 perpendicular and vertical to the front forward direction will be referred to as an upward direction, and a lower side is referred to as a downward direction.

As illustrated in Figs. 1 and 2, the mobile vehicle 1 includes a body frame 10, a front steering wheel 11, a rear steering wheel 12, a seat 13, a front step 14, and a rear step 15. The front steering wheel 11 is provided to a front portion of the body frame 10. The rear steering wheel 12 is provided to a rear portion of the body frame 10. The seat 13 is provided on an upper portion of the body frame 10. The front step 14 and the rear step 15 are provided on the left side of the body frame 10. The mobile vehicle 1 also includes a crawler traveling device 16 as a traveling device, an auxiliary wheel 17, a seat position adjustment device 18, batteries 19 as a power source, and a control unit 20 including a calculation unit and a storage unit. The crawler traveling device 16 is provided between the front steering wheel 11 and the rear steering wheel 12. The auxiliary wheel 17 is provided to the left side of the body frame 10. The seat position adjustment device 18 lifts the seat 13 up and down with respect to the body frame 10. The batteries 19 store electricity. The control unit 20 controls each device.

The mobile vehicle 1 has a substantially front and rear symmetrical configuration. A worker sits down on the seat 13. The worker rides the mobile vehicle while facing the left side. The worker puts his/her right and left feet on the front step 14 and the rear step 15, respectively, in a sitting position in the riding. Although details will be described later, the mobile vehicle 1 includes the front steering wheel 11 and the rear steering wheel 12 operated through the front step 14.

The body frame 10 is obtained by connecting a plurality of steel materials such as a cylindrical pipe and a platy plate by welding or the like. The outer form of the body frame 10 has a substantially hexagonal shape long in a front and rear direction in a plan view. The outer form of the body frame 10 has a ship-bottom shape in a side view. Note that, the material included in the body frame 10 should not be restricted. Examples of the material may include a rein and a composite material including the resin containing fibers, such as glass fibers or carbon fibers.

The body frame 10 includes a cylindrical front steering post 21 at a front end and a cylindrical rear steering post 22 at a rear end. A front steering shaft 23 having the front steering wheel 11 at a lower end, is inserted through the front steering post 21. A rear steering shaft 24 having the rear steering wheel 12 at a lower end, is inserted through the rear steering post 22. The front steering wheel 11 and the rear steering wheel 12 both include two wheels in a left and right direction. The front steering wheel 11 and the rear steering wheel 12 are rotatably supported at a lower end of the front steering shaft 23 and a lower end of the rear steering shaft 24, respectively. The front steering shaft 23 includes a flat-shaped flange 25 at an upper end positioned upper than an upper end of the front steering post 21.The flange 25 has a substantially rhombic shape in a plan view and protrudes in the left and right direction. The front steering wheel 11 is attached rotatably about an upper and lower direction as an axis, to the front end of the body frame 10 through the front steering post 21 and the front steering shaft 23. Note that, one end of a link arm 55 of a steering linkage 52 to be described later, is connected to a left end portion of the flange 25. As with the front steering shaft 23, the rear steering shaft 24 includes a flat-shaped flange 26 at an upper end positioned upper than an upper end of the rear steering post 22. The flange 26 has a substantially rhombic shape in a plan view and protrudes in the left and right direction. The rear steering wheel 12 is attached rotatably about the upper and lower direction as an axis, to the rear end of the body frame 10 through the rear steering post 22 and the rear steering shaft 24. Note that, one end of a link arm 56 of the steering linkage 52 to be described later, is connected to a left end portion of the flange 26.

Here, each of the front steering wheel 11 and the rear steering wheel 12 should not be restricted to the configuration including the two wheels. Each of the front steering wheel 11 and the rear steering wheel 12 may have a configuration including one wheel similar to the auxiliary wheel 17 to be described later. The front steering wheel 11 and the rear steering wheel 12 may be supported with the front steering shaft 23 and the rear steering shaft 24 through a buffering mechanism, respectively. Each of the front steering shaft 23 and the rear steering shaft 24 may include the buffering mechanism. An extendable and contractible rod-shaped damper including a cylinder can be exemplified as the buffering mechanism. The front steering wheel 11 and the rear steering wheel 12 are stably grounded. Additionally, the traveling performance and the comfortable ride improve.

The crawler traveling device 16 being the traveling device is attached to a center portion of the body frame 10 in the front and rear direction. The crawler traveling device 16 is positioned between the front steering wheel 11 and the rear steering wheel 12. The body frame 10 covers the upper side and both of the left side and the right side of the crawler traveling device 16.

A flat-shaped supporting stand 28 horizontally extending, is attached to an upper face of the body frame 10 through a plurality of props 27 extending in the upper and lower direction. A gap is formed between the body frame 10 and the supporting stand 28. The steering linkage 52 to be described later, that interlocks and connects the front step 14 to the front steering shaft 23 and the rear steering shaft 24, is arranged in the gap.

A front rotate shaft 29 and a rear rotate shaft 30 that extend upward so as to be connected to the supporting stand 28, are provided to the center of the upper face of the body frame 10 in the front and rear direction and in the left and right direction. The front rotate shaft 29 and the rear rotate shaft 30 are arranged having a predetermined interval, at a position of front and rear symmetry being the center of the body frame 10 in the left and right direction. As the details are described later, the front step 14 is rotatably attached to the front rotate shaft 29 and the rear step 15 is rotatably attached to the rear rotate shaft 30.

The body frame 10 includes recesses that are recessed downward, formed on the upper face before the front rotate shaft 29 and behind the rear rotate shaft 30. The batteries 19 are arranged on the recesses. The body frame 10 and the supporting stand 28 are covered with a cover not illustrated.

The seat 13 includes a flat-shaped sitting portion 31, a flat-shaped base portion 32, two seat posts 33, 33, and four load sensors 34. The sitting portion 31 has a substantially rectangular shape long in the front and rear direction in a plan view. The base portion 32 has a similar shape to that of the sitting portion 31. The base portion 32 is positioned below the sitting portion 31. Two seat posts 33, 33 protrude upward from a seating face 31a being an upper face of the sitting portion 31. Each of the two seat posts 33, 33 is formed to be substantially portal-shaped with both end portions of a cylindrical rod-shaped member extending in the left and right direction, folded downward. Both of the ends are attached detachably to the sitting portion 31. The two seat posts 33, 33 are arranged to be front and rear symmetrical with a predetermined interval. Here, the two seat posts 33, 33 are arranged so as to have the interval gradually expanding from the right side to the left side on which the front step 14 and the rear step 15 are positioned. The two seat posts 33, 33 are disproportionately positioned on the right side instead of the center of the sitting portion 31 in the left and right direction. Each of the two seat posts 33, 33 includes a grip 35 to be gripped by the worker, on an upper portion.

The worker takes the seat 13 with the buttocks being interposed between the two seat posts 33, 33. Each of the two seat posts 33, 33 protrudes from the seating face 31a, and includes the grip 35 to be gripped by the worker. The two seat posts 33, 33 retain the buttocks of the worker to be interposed in the riding. Therefore, the worker can take a stable s sitting position with the seat post 33 having such a simple configuration. Additionally, the worker can retain the sitting position, gripping the grips 35 even when the mobile vehicle 1 considerably joggles.

Note that, each of the two seat posts 33, 33 preferably is configured to be able to adjust an attaching position in response to the body of the worker. Here, the seat 13 should not be restricted to the configuration including the seat posts 33. The seat 13 may include the seat posts 33 bent outward in a plan view or may include a backrest and an armrest. The seating face 31a being the upper face of the sitting portion 31, is not restricted to a horizontal face. The seating face 31a may slant in the left and right direction or may include unevenness in which the buttocks of the worker are fitted. For example, when the seating face 31a is made to slant downward from the left side on which the front step 14 and the rear step 15 are positioned, to the right side, the buttocks of the worker in the riding are easily interposed between the two seat posts 33, 33. Therefore, the posture of the worker sitting the seat 13 stabilizes. Even when the seat position adjustment device 18 to be described later inclines the seat 13 toward the left side of the body frame 10 (the front side of the worker in the riding) so that the worker has a forward leaning position, the worker can retain a stable sitting position.

The load sensors 34 are individually arranged in proximity to the four corners of the sitting portion 31 in a plan view, between the sitting portion 31 and the base portion 32. The sitting portion 31 is supported by the base portion 32 through the four load sensors 34. The seat 13 is configured to able to detect the weight shift of the worker in the sitting position with the four load sensors 34. The load sensors 34 at least detect the weight shift of the worker in the sitting position. Examples of the load sensors 34 that can be used, include a load cell with a strain gauge. The number and the arrangement of the load sensor 34 are not restricted. Note that, the load sensors 34 are arranged so as to at least detect the weight shift of the worker in the sitting position in the front and rear direction or in the left and right direction.

The seat 13 having the configuration is attached to the supporting stand 28 through the seat position adjustment device 18. The supporting stand 28 is provided on the upper face of the body frame 10. The seat position adjustment device 18 includes two extendable and contractible rod-shaped electric cylinders 36, 36. Each of the electric cylinders 36, 36 include a ball screw and a motor and the like. One of the electric cylinders 36 is arranged along a left end portion of the supporting stand 28 in a plan view. An end on the front side of the electric cylinders 36 is connected rotatably about the left and right direction as an axis, to an upper face of the supporting stand 28. An end on the rear side of the electric cylinders 36 is connected rotatably about the left and right direction as an axis, to a lower face of the base portion 32. The other electric cylinder 36 is arranged along a right end portion of the supporting stand 28 in a plan view. An end on the front side of the other electric cylinders 36 is connected rotatably about the left and right direction as an axis, to the lower face of the base portion 32. An end on the rear side of the other electric cylinders 36 is connected rotatably about the left and right direction as an axis, to the upper face of the supporting stand 28. The two electric cylinders 36, 36 are arranged so as to intersect each other in X shape in a side view. The seat position adjustment device 18 is able to lift the seat 13 up and down with respect to the body frame 10, with the two electric cylinders 36, 36 extending and contracting. Note that, the seat position adjustment device 18 is covered with an extendable and contractible cover not illustrated, such as a rubber-made cover having bellows. Thus, the hands of the worker can be prevented from being pinched.

Here, the seat position adjustment device 18 is controlled by the control unit 20. The seat position adjustment device 18 operates based on the detection value of the load sensors 34 that detect the weight shift of the worker. For example, when it is determined that the weight of the worker has moved to the right side (the deep side in Fig. 1), based on the detection value of the load sensors 34, the control unit 20 control the seat position adjustment device 18 to extend the electric cylinders 36, and the seat 13 lifted up with respect to the body frame 10. When it is determined that the weight of the worker has moved to the left side (the near side in Fig. 1), based on the detection value of the load sensors 34, the control unit 20 control the seat position adjustment device 18 to contract the electric cylinders 36, and the seat13 is lifted down with respect to the body frame 10. That is, the seat position adjustment device 18 is able to operate with the weight shift of the worker.

Note that, the seat position adjustment device 18 should not be restricted to the configuration. The seat position adjustment device 18 is at least able to lift the seat 13 up and down with respect to the body frame 10. For example, the electric cylinders 36 may be arranged so as to vertically extend and contract. Hydraulic cylinders or pneumatic cylinders may be used instead of the electric cylinders 36. A pantograph linkage may be used. The seat position adjustment device 18 may be able to incline the seat 13 in the front and rear direction or in the left and right direction with respect to the body frame 10. As such a configuration, a configuration including the four electric cylinders 36 arranged to vertically extend and contract can be exemplified, and the seat 13 can be lifted up and down and inclined with respect to the body frame 10. The seat position adjustment device 18 may be able to operate through an operation switch provided separately. However, the seat position adjustment device 18 is preferably able to operate with the weight shift of the worker in terms of the work efficiency.

The auxiliary wheel 17 is positioned between the front step 14 and the rear step 15, on the left side of the center of the body frame 10 in the front and rear direction. The auxiliary wheel 17 improves the stability of the mobile vehicle 1 in the left and right direction. The auxiliary wheel 17 is rotatably supported by a bracket 37 being substantially inverse U-shaped in vertically sectional shape. The auxiliary wheel 17 is connected to a left side portion of the body frame 10 through a linkage. The linkage has a damper 38 as a buffering mechanism, and two lower links 39 and 39.

The damper 38 is an extendable and contractible rod-shaped buffering mechanism including a cylinder. One end of the damper 38 is connected rotatably about the front and rear direction as an axis, to a right side portion of the bracket 37. The other end of the damper 38 is connected rotatably about the front and rear direction as an axis, to the left side portion of the body frame 10. Note that, the other end of the damper 38 being a connecting portion with respect to the body frame 10, is positioned upper than the one end being a connecting portion with respect to the bracket 37. Each of the two lower links 39, 39 is a rod-shaped member having rigidity. Each of one ends of each of the lower links 39 is connected rotatably about the front and rear direction as an axis, to the right side portion of the bracket 37. Each of the other ends of the lower links 39 is connected rotatably about the front and rear direction as an axis, to the left side portion of the body frame 10. Note that, the two lower links 39, 39 are arranged to have front and rear symmetry. The two lower links 39 are positioned lower than the damper 38, extending substantially and horizontally.

The mobile vehicle 1 can buffer the impact between the body frame 10 and the auxiliary wheel 17, with the linkage including the damper 38 so that the stability may improve in traveling. For example, an impact load upward due to an upheaval on the ground, may be added to the auxiliary wheel 17 so that the impact load may swing the auxiliary wheel 17 upward. In this case, the damper 38 being the buffering mechanism, contracts so as to buffer the impact so that the mobile vehicle 1 can travel stably.

Note that the number and the arrangement of the auxiliary wheels 17 should not be restricted to the configuration. For example, the auxiliary wheel 17 may be provided on the right side of the body frame 10, being a side opposite to the side of the front step 14 and the rear step 15. The auxiliary wheel 17 may be provided to each of the left side and the right side of the body frame 10. With such a configuration, the stability of the mobile vehicle 1 further improve with such a configuration. Note that, the worker tends to lean forward in the riding, and thus the auxiliary wheel 17 is preferably provided at least on the left side of the body frame 10, on which the front step 14 and the rear step 15 are positioned. Additionally, the width of the mobile vehicle 1 in the left and right direction can be narrowed. The auxiliary wheel 17 is provided between the front step 14 and the rear step 15 so that the mobile vehicle 1 can be made compact and the stability can also effectively improve.

The configuration connecting the auxiliary wheel 17 to the body frame 10 should not be restricted to the link configuration. However, a linkage including a buffering mechanism is preferable in terms of the stability in the traveling. For example, when the auxiliary wheel 17 is provided on each of the left side and the right side of the body frame 10, a linkage may be provided that include a rod-shaped member with rigidity and two dampers 38, 38. One end of the rod-shaped member is connected to the auxiliary wheel 17 on the left side. The other end of the rod-shaped member is connected to the auxiliary wheel 17 on the right side. And a center portion of the rod-shaped member is connected rotatably about the front and rear direction as an axis, to the body frame 10. One of the dampers 38 is provided between the auxiliary wheel 17 on the left side and the body frame 10. The other of the dampers 38 is provided between the auxiliary wheel 17 on the right side and the body frame 10.

A linkage may be provided that can lift the auxiliary wheel 17 up and down with respect to the body frame 10. As such a configuration, a configuration including an extendable and contractible rod-shaped electric cylinder having a ball screw and a motor, instead of the damper 38, can be exemplified. When such a configuration is provided, a positional angle sensor that detects the roll angle being an amount of incline of the body frame 10 in the left and right direction, is further provided and the control unit 20 controls the electric cylinder in response to the detection value of the positional angle sensor. Thus, attitude control of the mobile vehicle 1 can be made so that the stability of the mobile vehicle 1 may further improve in the traveling. For example, a gyro sensor can be used as the positional angle sensor. The arrangement and the number of the positional angle sensors are not limited.

The auxiliary wheel 17 is preferably attached to the body frame 10 through the linkage including an extendable and contractible connecting member, such as the damper 38 or the electric cylinder, in terms of the stability in the traveling.

The crawler traveling device 16 being the traveling device, includes a driving wheel 40, a coupled driven wheel 41, a crawler belt 42, and a motor 43 being driving device that drives the crawler traveling device 16. The crawler belt 22 is wound around the driving wheel 40 and the coupled driven wheel 41 so as to be in contact with these externally. The driving wheel 40 and the coupled driven wheel 41 are rotatably supported by the body frame 10. The motor 43 is supported, between the driving wheel 40 and the coupled driven wheel 41, by the body frame 10. The driving force of the motor 43 is transmitted to the driving wheel 40 through a gear box not illustrated so that the crawler traveling device 16 may drive. The crawler traveling device 16 also includes an unillustrated tension adjustment device and an unillustrated brake device. The tension adjustment device is configured to adjust tension of the crawler belt 42 by moving a position of the coupled driving wheel 41 with respect to the body frame 10. The brake device is configured to stop rotation of the driving wheel 40.

The motor 43 configured to drive the crawler traveling device 16 is an electromotive motor which drives with electric power of the batteries 19 being the power source. The motor 43 is controlled by the control unit 20. The motor 43 drives with the electric power of the batteries 19 so that the crawler traveling device 16 drives and then the mobile vehicle 1 can travel.

Here, the crawler traveling device 16 being the traveling device, the front steering wheel 11, and the rear steering wheel 12, are arranged in a row in the front and rear direction in a plan view so that the mobile vehicle 1 may be made compact in the left and right direction.

The crawler traveling device 16 is directly supported by the body frame 10. However, for example, the crawler traveling device 16 may be attached swingably in the upper and lower direction about the left and right direction as an axis, to the body frame 10. Additionally, a buffering mechanism that inhibits the swing in the upper and lower direction, may be provided. The buffering mechanism is provided between the body frame 10 and the crawler traveling device 16.As the buffering mechanism, an expandable and contactable rod-shaped damper including a cylinder can be exemplified. With such a configuration, the crawler traveling device 16 is stably grounded and additionally the traveling performance and the comfortable ride improve.

The mobile vehicle 1 should not be restricted to the configuration traveling with a crawler traveling device being the traveling device driven by the electric power of the batteries 19 being the power source. The mobile vehicle 1 may include an engine being a power source, and may also travel with a crawler traveling device being the traveling device driving with the power of the engine. Furthermore, the mobile vehicle 1 may be configured to travel with a crawler traveling device being the traveling device driving with human power. For example, the mobile vehicle 1 may include a crawler traveling device to which a power generated by pressing down or rotating the rear step 15 is transmitted. The mobile vehicle 1 may travel with the crawler traveling device driving with the power.

The traveling device in the mobile vehicle 1 should not be restricted to a crawler traveling device, and may be a wheel traveling device. When the crawler traveling device is provided, the crawler bearing area is large and the stability is satisfactory so that favorable traveling can be made even on rough terrain or relatively soft ground. Meanwhile, when the wheel traveling device is provided, the traveling speed and the turning performance can improve.

The front step 14 includes a step arm 44 and a foot plate 45 attached to the step arm 44. The step arm 44 is attached to the body frame 10. The right foot of the worker is put on the foot plate 45. The step arm 44 is obtained by bending down a square pillared member horizontally extending. The step arm 44 is formed to be substantially inverse L-shaped. The foot plate 45 is attached to an end portion of the step arm 44, positioned on the lower side. The step arm 44 includes a cylindrical tube part 46 extending in the upper and lower direction. The tube part 46 is provided to an end portion of the step arm 44, positioned on the upper side. The tube part 46 includes a connecting tube part 47 having the outer diameter of the tube part 46 reduced, on an upper portion. The front rotate shaft 29 is inserted through the tube part 46. The front step 14 is attached rotatably in the front and rear direction about the front rotate shaft 29 as an axis, to the body frame 10. Note that, the step arm 44 is configured to be able to be prevented from rotating about the front rotate shaft 29 as an axis with an unillustrated locking pin. In other word, the step arm 44 is configured to be able to be fixed to the body frame 10.

The foot plate 45 is substantially fan-shaped in a plan view. The foot plate 45 is attached to the end portion of the step arm 44, positioned on the lower side, to extend horizontally and to protrude outward. An edge portion on the front side and an edge portion on the rear side of the foot plate 45, are bent upward. Note that, the foot plate 45 is attached to the step arm 44 so as to rotate upward and follow the step arm 44 by being rotated upward.

The rear step 15 has a similar configuration to that of the front step 14. The rear step 15 includes a step arm 48 and a foot plate 49 attached to the step arm 48. The left foot of the worker is put on the foot plate 49. The step arm 48 is obtained by bending down a square pillared member horizontally extending. The step arm 48 is formed to be substantially inverse L-shaped. The foot plate 48 is attached to an end portion of the step arm 48, positioned on the lower side. The step arm 48 includes a cylindrical tube part 50 extending in the upper and lower direction. The tube part 50 is provided to an end portion of the step arm 48, positioned on the upper side. The tube part 50 includes a connecting tube part 51 having the outer diameter of the tube part 50 reduced, on an upper portion. The front rotate shaft 30 is inserted through the tube part 50. The rear step 15 is attached rotatably in the front and rear direction about the front rotate shaft 30 as an axis, to the body frame 10. Note that, the step arm 48 is prevented from rotating about the front rotate shaft 30 as an axis with an unillustrated locking pin. The step arm 48 is fixed to the body frame 10.

The foot plate 49 is substantially fan-shaped in a plan view. The foot plate 49 is attached to the end portion of the step arm 48, positioned on the lower side, to extend horizontally and to protrude outward. An edge portion on the front side and an edge portion on the rear side of the foot plate 49, are bent upward. Note that, the foot plate 49 is attached to the step arm 48 so as to rotate upward and follow the step arm 48 by being rotated upward.

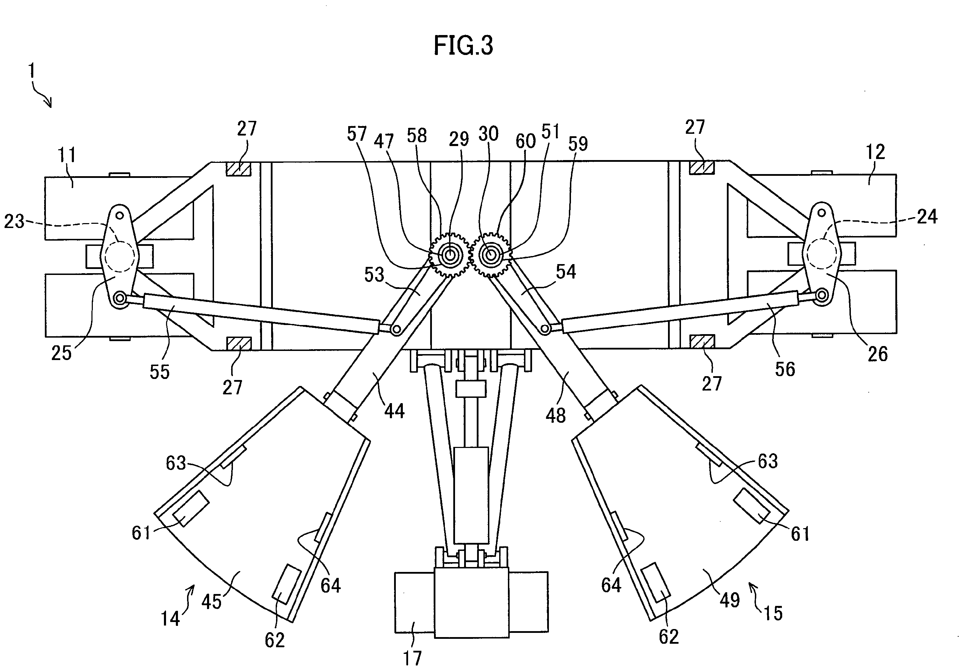

As illustrated in Fig. 3, the front step 14 is interlocked and connected to the front steering shaft 23 and the rear steering shaft 24 through the steering linkage 52. Here, Fig. 3 is a schematic plan view illustrating a configuration of the steering linkage 52. In Fig. 3, the illustrations of the seat 13, the seat position adjustment device 18, the control unit 20, and the supporting stand 28 are omitted, and the props 27 is illustrated in section.

The steering linkage 52 includes two link plates 53, 54 and the two link arms 55, 56. The link plate 53 includes a cylindrical supporting tube 57 and a gear 58. The cylindrical supporting tube 57 is provided at one end of the link plate 53. The cylindrical supporting tube 57 is extending in the upper and lower direction. The gear 58 is fixed to the cylindrical supporting tube 57. The connecting tube part 47 of the tube part 46 of the step arm 44 of the front step 14, is inserted into the supporting tube 57. The link plate 53 is attached rotatably in the front and rear direction about the connecting tube part 47 as an axis, to the step arm 44. Note that, the front rotate shaft 29, the tube part 46, the connecting tube part 47, the supporting tube 57, and the gear 58 are coaxially positioned. The connecting tube part 47 and the supporting tube 57 connected to an unillustrated locking pin so that the link plate 53 is prevent form rotating about the connecting tube part 47 as an axis. The link plate 53 is fixed to the step arm 44. That is, the link plate 53 is integrally rotatable with the front step 14 in the front and rear direction about the front rotate shaft 29 as an axis.

The link arm 55 is a round pillared and rod-shaped member. One end of the link arm 55 is connected rotatably about the upper and lower direction as an axis, to the other end of the link plate 53. The other end of the link arm 55 is connected rotatably about the upper and lower direction as an axis, to the left end portion of the flange 25.

The link plate 54 has a similar configuration to that of the link plate 53. The link plate 54 includes a cylindrical supporting tube 59 and a gear 60. The cylindrical supporting tube 59 is provided at one end of the link plate 54. The cylindrical supporting tube 59 is extending in the upper and lower direction. The gear 60 is fixed to the cylindrical supporting tube 59. The connecting tube part 51 of the tube part 50 of the step arm 48 of the front step 15, is inserted into the supporting tube 59. The link plate 54 is attached rotatably in the front and rear direction about the connecting tube part 51 as an axis, to the step arm 48. The rear rotate shaft 30, the tube part 50, the connecting tube part 51, the supporting tube 59, and the gear 60 are coaxially positioned. The gear 58 of the link plate 53 engages with the gear 60 of the link plate 54. The gear 58 and the gear 60 are the same in pitch. The link plate 54 is configure to be able to be prevented from rotating about the connecting tube part 51 with an unillustrated locking pin connecting the connecting tube part 51 and the supporting tube 59. That is, the link plate 54 is configured to be integrally rotatable with the rear step 15 in the front and rear direction about the rear rotate shaft 30 as an axis.

The link arm 56 is a round pillared and rod-shaped member. One end of the link arm 56 is connected rotatably about the upper and lower direction as an axis, to the other end of the link plate 54. The other end of the link arm 55 is connected rotatably about the upper and lower direction as an axis, to the left end portion of the flange 26.

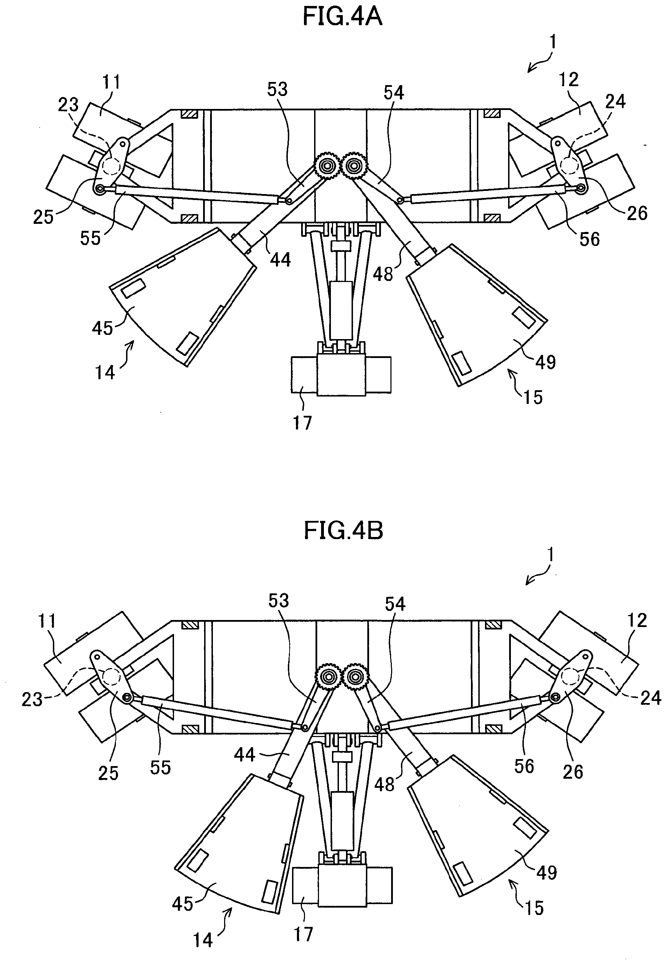

The steering linkage 52 with the configuration interlocks and connects the front step 14 to the front steering shaft 23 and the rear steering shaft 24. As illustrated in Fig. 4, the front step 14 rotates in the front and rear direction about the front rotate shaft 29 as an axis so that the front steering wheel 11 and the rear steering wheel 12 may operate. Here, Figs. 4A and 4B are schematic plan views illustrating the operation of the steering linkage 52. Fig. 4A illustrate a state of the steering linkage 52 at the time of right turning, and Fig. 4B illustrate one at the time of left turning. Figs. 4A and 4B similar to Fig. 3. In Figs 4A and 4B, the illustrations of the seat 13, the seat position adjustment device 18, the control unit 20, and the supporting stand 28 are omitted, and the props 27 are illustrated in section.

As illustrated in Fig. 4A, when the front step 14 rotates in the front direction (clockwise in a plan view) about the front rotate shaft 29 as an axis, from the state illustrated in Fig. 3, since the connecting tube part 47 and the supporting tube 57 are connected with the locking pin, the link plate 53 integrally rotates with the front step 14, in the front direction (clockwise in a plan view) about the front rotate shaft 29 as an axis. The link plate 53 rotates in the front direction (clockwise in a plan view) about the front rotate shaft 29 as an axis so that the link arm 55 may be pushed forward. Then, the front steering shaft 23 rotates clockwise in a plan view and the front steering wheel 11 operates so that the mobile vehicle 1 may turn to the right.

Here, the gear 58 of the link plate 53 engages with the gear 60 of the link plate 54. Therefore, the link plate 53 rotates clockwise in a plan view so that the link plate 54 may rotate in the rear direction (counterclockwise in a plan view) about the connecting tube part 51 of the step arm 48 as an axis. The link plate 54 rotates in the rear direction (counterclockwise in a plan view) about the connecting tube part 51 as an axis so that the link arm 56 may be pushed backward. Then, the rear steering shaft 24 rotates counterclockwise in a plan view and the rear steering wheel 12 operates so that the mobile vehicle 1 may turn to the right.

Therefore, the front step 14 rotates clockwise in a plan view about the front rotate shaft 29 as an axis so that the front steering shaft 23 may rotate clockwise in a plan view and the rear steering shaft 24 may rotate counterclockwise in a plan view. Thus, the front steering wheel 11 and the rear steering wheel 12 operate so that the mobile vehicle 1 may turn to the right.

Meanwhile, as illustrated in Fig. 4B, when the front step 14 rotates in the rear direction (counterclockwise in a plan view) about the front rotate shaft 29 as an axis, from the state illustrated in Fig. 3, since the connecting tube part 47 and the supporting tube 57 are connected with the locking pin, the link plate 53 integrally rotates with the front step 14 in the rear direction (counterclockwise in a plan view) about the front rotate shaft 29 as an axis. The link plate 53 rotates in the rear direction (counterclockwise in a plan view) about the front rotate shaft 29 as an axis so that the link arm 55 may be pulled backward. Then, the front steering shaft 23 rotates counterclockwise in a plan view and the front steering wheel 11 operates so that the mobile vehicle 1 may turn to the left.

The gear 60 of the link plate 54 is engaging with the gear 58 of the link plate 53. The link plate 53 rotates counterclockwise in a plan view so that the link plate 54 may rotate in the front direction (clockwise in a plan view) about the connecting tube part 51 of the step arm 48 as an axis. The link plate 54 rotates in the front direction (clockwise in a plan view) about the connecting tube part 51 as an axis so that the link arm 56 may be pulled forward. Then, the rear steering shaft 24 rotates clockwise in a plan view and the rear steering wheel 12 operates so that the mobile vehicle 1 may turn to the left.

Therefore, the front step 14 rotates counterclockwise in a plan view about the front rotate shaft 29 as an axis so that the front steering shaft 23 may rotate counterclockwise in a plan view and the rear steering shaft 24 may rotate clockwise in a plan view. Thus, the front steering wheel 11 and the rear steering wheel 12 operate so that the mobile vehicle 1 may turn to the left.

The mobile vehicle 1 includes the front step 14 interlocked and connected to the front steering shaft 23 and the rear steering shaft 24 the steering linkage 52. The front step 14 is configured to operate the front steering wheel 11 and the rear steering wheel 12. Therefore, the worker can steer the mobile vehicle 1 with the movement of a leg in the sitting position. Note that, the worker in the sitting position steers the mobile vehicle 1, by moving the right leg including the femoral region in the front and rear direction of the vehicle, namely, opening and closing legs. Here, the two seat posts 33, 33 that retain the worker in the sitting position, are arranged so as to have the interval gradually expanding from the right side to the left side on which the front step 14 and the rear step 15 are positioned. The two seat posts 33, 33 are disproportionately positioned on the right side instead of the center of the sitting portion 31 in the left and right direction. Therefore, the worker can favorably move the leg including the femoral region in the front and rear direction (open and close legs).

Here, the front step 14, the rear step 15, and the steering linkage 52 are configured to be switchable from the front step 14 to the rear step 15 in order to operate the front steering wheel 11 and the rear steering wheel 12 therewith. As a method of making the switch, the step arm 44 of the front step 14 first is prevented from rotating about the front rotate shaft 29 as an axis, with the locking pin. Then, the front step 14 is fix to the body frame 10. Next, the locking pin connecting the connecting tube part 47 of the step arm 44 and the supporting tube 57 of the link plate 53, is removed. The link plate 53 is made rotatable in the front and rear direction about the connecting tube part 47 of the step arm 44 as an axis. Next, the locking pin preventing the step arm 48 of the rear step 15 from rotating about the rear rotate shaft 30 as an axis, is removed. The rear step 15 is made rotatable about the rear rotate shaft 30 as an axis. Next, the connecting tube part 51 and the supporting tube 59 are connected with the locking pin. The link plate 54 is made integrally rotatable with the rear step 15 in the front and rear direction about the rear rotate shaft 30 as an axis.

As described above, the rotation of the front step 14 with respect to the front rotate shaft 29, the rotation of the link plate 53 with respect to the front step 14, the rotation of the rear step 15 with respect to the rear rotate shaft 30, and the rotation of the link plate 54 with respect to the rear step 15 each are varied so that the switching can be made in order to operate the front steering wheel 11 and the rear steering wheel 12 with the rear step 15. In this manner, the front step 14 and the rear step 15 are switchable so that the front steering wheel 11 and the rear steering wheel 12 may operate with one of the steps. Thus, the selection of the steps that perform a steering operation, can be made in response to the dominant leg of the worker or a switch between forward movement and backward movement so that the usability may be satisfactory.

Note that, the steering mechanism of the mobile vehicle 1 should not restricted to the above described configuration including the steering linkage 52. The front steering wheel 11 and the rear steering wheel 12 are at least operated with one of the front step 14 and the rear step 15. For example, vehicle 1 may include an angular sensor and two motors. The angular sensor detects the rotation direction and the rotation quantity of the front step 14 with respect to the body frame 10. The two motors individually rotate the front steering shaft 23 and the rear steering shaft 24 about the upper and lower direction as an axis with respect to the body frame 10. The control unit 20 may control the two motors in response to the detection value of the angular sensor. As the angular sensor, a rotary encoder can be exemplified. With such a configuration, the configuration of the mobile vehicle 1 is simplified and the production efficiency improves.

The front step 14 and the rear step 15 are at least provided on any one side of the body frame 10, and, for example, the steps may be provided on the right side of the body frame 10. Note that, for the configuration of the front step 14, the rear step 15, and the steering linkage 52, each is arranged in a bilateral symmetric position to the above described configuration so that the front step 14 and the rear step 15 can be positioned on the right side of the body frame 10. Therefore, the selection of the position of the front step 14 and the rear step 15 between the left and right sides of the body frame 10 can be made in response to the dominant leg of the worker so that the usability may be satisfactory.

The link arm 55 and the front steering shaft 23, and, the link arm 56 and the rear steering shaft 24, each may be interlocked and connected through gears. With such a configuration, the rotation angle of the front step 14 can be reduced. Force necessary for the rotating operation of the front step 14 can be decreased during the operation. The operability may improve.

The switching configuration of the front step 14 and the rear step 15 for the steering operation, should not be restricted to the configuration including the locking pins. For example, a configuration in which the switching can be made with an electromagnet, so that the switching can be easily made.

In the configuration, the entire front step 14 rotates with respect to the body frame 10. However, the foot plate 45 of the front step 14 may rotate in the front and rear direction about the upper and lower direction as an axis, with respect to the step arm 44, so that the front steering wheel 11 and the rear steering wheel 12 may operate. The foot plate 45 may rotate in the upper and lower direction about the front and rear direction as an axis, with respect to the step arm 44.

Here, the front step 14 and the rear step 15 are configured to operate the front steering wheel 11 and the rear steering wheel 12, also to perform a speed change operation of the mobile vehicle 1. As illustrated in Fig. 2, the front step 14 and the rear step 15 include an acceleration switch 61, a brake switch 62, a forward/backward movement changeover switch 63, and a seat adjustment switch 64, on the foot plates 45 and 49, respectively. The acceleration switch 61 is used for moving the mobile vehicle 1 forward or backward. The brake switch 62 is used for braking the mobile vehicle 1. The forward/backward movement changeover switch 63 is used for making a switch of the forward movement and the backward movement of the mobile vehicle 1. The seat adjustment switch 64 is used for activating the seat position adjustment device 18.

The acceleration switch 61 and the brake switch 62 each are an automatic-reset (momentary-type) push switch. The forward/backward movement changeover switch 63 and the seat adjustment switch 64 each are a position-holding (alternate-type) push switch. In the mobile vehicle 1, the crawler traveling device 16 is driven at a predetermined speed only while the pressing operation of the acceleration switch 61 is performed. The brake device of the crawler traveling device 16 is driven only while the pressing operation of the brake switch 62 is performed. The mobile vehicle 1 is configured to change the driving direction of the crawler traveling device 16 every time the pressing operation of the forward/backward movement changeover switch 63 is performed. The mobile vehicle 1 is configured to perform or stop the control of the seat position adjustment device 18 based on the detection value of the load sensors 34, every time the pressing operation of the seat adjustment switch 64 is performed. Therefore, the worker can perform the traveling operation of the mobile vehicle 1 without using his/her hands so that the usability may be satisfactory.

Here, when the front step 14 operates the front steering wheel 11 and the rear steering wheel 12, the acceleration switch 61, the brake switch 62, the forward/backward movement changeover switch 63, and the seat adjustment switch 64, arranged at the front step 14 do not function. When the rear step 15 operates the front steering wheel 11 and the rear steering wheel 12, the acceleration switch 61, the brake switch 62, the forward/backward movement changeover switch 63, and the seat adjustment switch 64, arranged at the rear step 15, do not function. Therefore, the leg that steers the mobile vehicle 1 is not required to perform the other operations so that the operability may be favorable and additionally the worker can retain a stable sitting position.

Note that, the acceleration switch 61, the brake switch 62, the forward/backward movement changeover switch 63, and the seat adjustment switch 64, arranged at the front step 14, should not be restricted to the configuration. The form and the position of the switches can be appropriately selected. For example, the acceleration switch 61 and the brake switch 62 may vary the driving speed of the crawler traveling device 16 and the operation of the brake device of the crawler traveling device 16 in response to the operation quantity of the pressing operation (the pressing quantity). The mobile vehicle 1 may move over a predetermined distance every time the pressing operation of the acceleration switch 61 is performed (one foot push) so that the operability may be simplified and the usability may be satisfactory. Only when the load sensors 34 detect the load, the acceleration switch 61 may function so that the mobile vehicle 1 may be prevented from suddenly traveling and the usability may be satisfactory.

The front step 14 and the rear step 15 each may include another switch, such as a power switch, or may include no switches. However, in terms of the workability, at least one of the front step 14 and the rear step 15 is preferably configured to perform a speed change operation of the mobile vehicle 1. The worker can perform the traveling operation of the mobile vehicle 1 without using his/her hands and another operation can be performed with the hands.

The front step 14 and the rear step 15 each may include a fastening tool, such as a band that fastens the foot of the worker put on the foot plate 45 or 49. With such a configuration, the operation of the front steering wheel 11 and the rear steering wheel 12 by the front step 14 and the rear step 15, may be facilitated. Note that, such a fastening tool is preferably provided to one of the steps that operate the front steering wheel 11 and the rear steering wheel 12, in terms of the safety. Upper faces of the foot plates 45 and 49 on which the feet of the worker are put, each should not restricted to a horizontal face. Upper faces of the foot plates 45 and 49 may slant in the left and right direction. For example, the upper faces of the foot plates 45 and 49 are made to slant upward to the outside (the left side). Even when the seat position adjustment device 18 inclines the seat 13 toward the left side of the body frame 10 (the front side of the worker in the riding) so that the worker has a forward leaning position, the worker can retain a stable sitting position. The foot plates 45 and 49 each may include an edge portion bended upward, on the outside (the left side), in addition to the edge portions on the front side and the rear side.

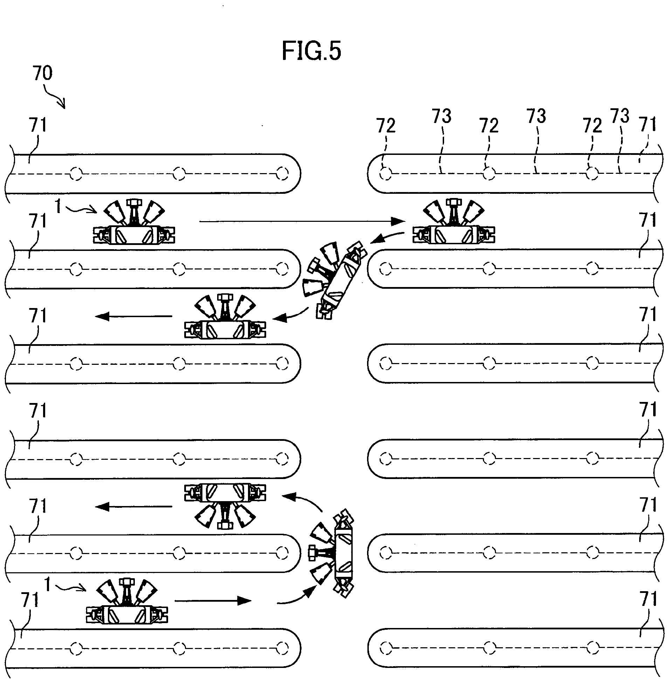

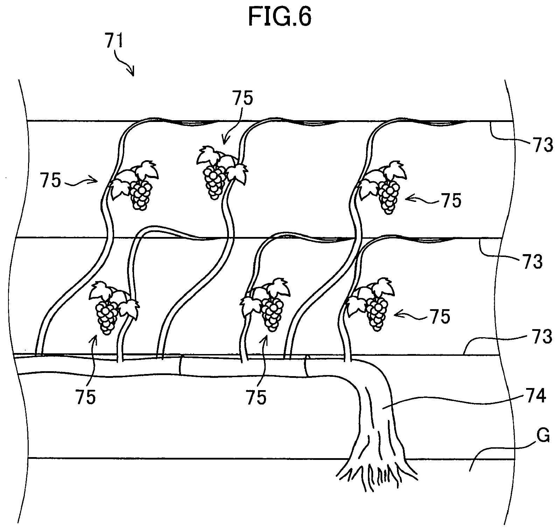

Next, exemplary crop harvest operation using the mobile vehicle 1 will be described. Here, Fig. 5 is a schematic plan view illustrating an example of a farm land 70 where grapes as an example of the crops are planted. Fig. 6 is a schematic side view of one fence of grapes 71 for description of a planting condition. Note that, an arrow in Fig. 5 indicates a partial path of the mobile vehicle 1 in the farm land 70.

Grapes used as raw materials of wine may be planted by forming a plurality of fence-like rows in the farm land 70, as illustrated in Fig. 5 and Fig. 6, from a point of view, for example, of improving efficiency in raising and managing grapes, and of improving raising conditions such as sunlight and ventilation. The fences of grapes 71 forming such rows are formed by using a plurality of stakes 72, ropes 73, and the like. The stakes 72 are disposed linearly at a substantially equal interval in the farm land 70. A plurality of ropes 73 having different heights is extended between the adjacent stakes 72. Grapevines 74 are planted along the rows of the stakes 72 at a substantially equal interval. As illustrated in Fig. 6, each trunk of grapevine 74 is fixed to a rope 73 which is placed at a lower part and is raised so as to extend along this rope 73. Tendrils extending from each trunk of grapevine 74 creep along other ropes 73 so as to form each fence of grapes 71.

The grapevine 74 is raised, subjected to pruning and the like so that clusters 75 of the grapes will grow, forming two rows in the top and bottom, at positions having predetermined heights, for example, 500 mm to 2000 mm from the ground G. In other words, the clusters 75 of the grapes will have heights near the hands of the worker sitting down on a chair and the like. From a point of view of production efficiency and the like, a width between the fences of grapes 71 (furrow) forming a plurality of rows is made narrow enough for two workers to pass each other, that is, for example, 1000 mm to 2000 mm.

Note that, each stake 72, each rope 73, and the like are not restricted, but it is preferable to use those with less influences on the ground G. A preferable example of each stake 72 includes wood such as a log, and a preferable example of each rope 73 includes one that is formed by biodegradable plastic.

In the farm land 70 in which the grapes are planted as described above, the worker rides on the mobile vehicle 1, taking the seat 13 and facing the left side of the mobile vehicle 1. Then, the mobile vehicle 1 travels between the fences of grapes 71 in the plurality of rows (furrow) so that the grapes may be harvested. The worker rides on the vehicle at the sitting position facing the left side of the mobile vehicle 1. The worker faces the left side, in a forward movement direction, of each fence of grapes 71.
The worker in a sitting position cuts peduncles of the bunches of grapes 55 in front of him/her with cutting tools such as scissors and then the worker handpicks the clusters 75 of the grapes. Note that, the picked clusters 75 of the grapes may be housed, for example, in the crop box 32 attached to the connection frame 11 illustrated in Fig. 5 or in an unillustrated crop box disposed in the farm land 50. Note that, the picked clusters 75 of the grapes are housed in an unillustrated crop box disposed in the farm land 70.

Here, the mobile vehicle 1 can travel the furrow while the worker keeps his/her operational posture at the sitting position. The worker can operate the front steering wheel 11 and the rear steering wheel 12 with the front step 14 without using his/her hands. Therefore, the load of the worker during the harvest operation by the handpicking is reduced so that the efficiency of the harvest operation may improve.

The mobile vehicle 1 travels with the crawler traveling device 16 driven by the electric power of the batteries 19 being the power source. The labor of the worker consumed for the movement in the farm land 70 may be reduced and the efficiency of the harvest operation may improve.

The mobile vehicle 1 includes the acceleration switch 61, the brake switch 62, and the forward/backward movement changeover switch 63 provided to the rear step 15. The worker can change a speed of the mobile vehicle 1 with these switches without using his/her hands. Thus, the traveling operation can be performed with the handpicking work not interrupted so that the usability may be satisfactory and the efficiency of the harvest operation may improve.

The mobile vehicle 1 includes the crawler traveling device 16, the front steering wheel 11, and the rear steering wheel 12 arranged in a row in the front and rear direction in a plan view. The mobile vehicle 1 may be made compact in the left and right direction. The width of the mobile vehicle 1 in the left and right direction is generally equivalent to the width of the worker from the toes to the back in the sitting position. Therefore, the mobile vehicle 1 can travel furrows having a narrow width, for example, furrows in the farm land 70 as narrow as the workers can pass each other. Note that, the stability of the mobile vehicle 1 in the left and right direction may degrade due to the compactification in the left and right direction. However, the crawler traveling device 16 secures a crawler bearing area and additionally the auxiliary wheel 17 is provided so that the stability may improve.

The mobile vehicle 1 has a substantially front and rear symmetrical structure. The worker rides in the sitting position facing the left side of the mobile vehicle 1. Thus, the operability may barely degrade in making a switch between the forward movement and the backward movement. Therefore, as illustrated in Fig. 5, a switchback turn that turns with the switching between the forward movement and the backward movement, can be easily made with the operability remaining. Thus, the traveling performance is satisfactory in the farm land 70 having narrow furrows. The mobile vehicle 1 includes the front steering wheel 11 at a front portion and the rear steering wheel 12 at a rear portion so that the turning radius can be reduced. Therefore, as illustrated in Fig. 5, U-turn traveling can be favorably performed even in the farm land 70 having narrow furrows.

The mobile vehicle 1 includes the seat position adjustment device 18 that operates based on the detection value of the load sensors 34. Thus, the position of the seat 13 can be varied in response to the body of the worker or a position at which the clusters 75 of the grapes of the grapes grow being objects to be harvested. Therefore, the worker may have a position for easily performing the harvest operation and the usability may be satisfactory. Furthermore, the worker can vary the height of the seat 13 without using his/her hands so that the usability may be satisfactory and the efficiency of the harvest operation by the handpicking may improve.

The mobile vehicle 1 includes the seat posts 33 which retains the buttocks of the worker to be interposed in the riding. Additionally, each of the seat posts 33 has the grip 35. Thus, the worker can take an operation posture in a stable sitting position with a simple configuration and the efficiency of the harvest operation by the handpicking may improve. The worker can grip the grips 35 and can retain the sitting position even when the mobile vehicle 1 considerably joggles.

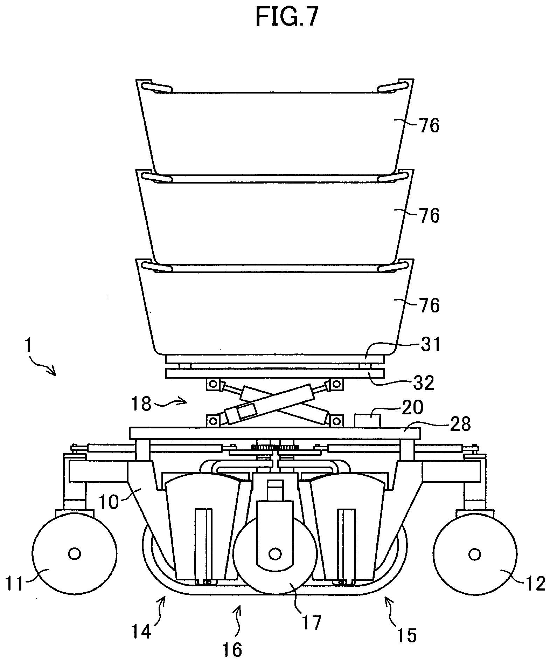

Here, the two seat posts 33 and 33 are detachably attachable to the sitting portion 31. Thus, when the two seat posts 33, 33 are removed from the sitting portion 31, the use application of the mobile vehicle 1 expands and the usability is satisfactory. For example, the mobile vehicle 1 further includes a communication device that receives information from the outside, and the mobile vehicle 1 is made remote-controllable with an external operation device instead of the worker riding. With such a configuration, as illustrated in Fig. 7, the mobile vehicle 1 can be used as a conveying vehicle that conveys crop boxes 76 hosing the clusters 75 of the grapes that have been picked. In this case, the crop boxes 76 are loaded onto the sitting portion 31 of the seat 13.

Note that, the object to be conveyed by the mobile vehicle 1 should not be restricted to the crop boxes 76 housing the clusters 75 of the grapes. Any object that can be loaded onto the sitting portion 31 of the seat 13 may be conveyed, and a chemical liquid tank that houses fertilizer, antiseptic solution, or water may be conveyed.

Here, when the mobile vehicle 1 is remotely controlled, the foot plate 45 of the front step 14 and the foot plate 49 of the rear step 15 are rotated upward so as to follow the step arms 44, 48, respectively. Thus, the foot plates 45, 49 are housed. As a result of housing the foot plates 45, 49, the foot plates 45, 49 may be prevented from being caught on unevenness or grass on the ground and the traveling performance improves.

The mobile vehicle 1 includes the seat position adjustment device 18 that lifts the seat 13 up and down. Thus, the crop boxes 76 loaded on the sitting portion 31 can be lifted up and down. For example, the loading operation of the crop boxes 76 onto a truck can be easily performed. The mobile vehicle 1 is made remote-controllable so that the mobile vehicle 1 can be loaded onto and can be unloaded from a conveying truck without the riding and thus the usability is satisfactory.

Note that, when the mobile vehicle 1 is used as the conveying vehicle, a pair of the mobile vehicles 1 may be remotely controlled to travel in parallel, with one external operation device. With such a configuration, an object to be conveyed can be conveyed, being loaded across the sitting portions 31 of the two mobile vehicles 1. Thus, a large object to be conveyed can be stably conveyed. The seat position adjustment devices 18 of the two mobile vehicles 1 are operated in response to unevenness or a slant on a traveling path so that the object to be conveyed can be further stably conveyed. The seat position adjustment devices 18 may be operated by the worker with an external operation device, or may be controlled in response to the detection values of the positional angle sensor or the load sensors 34 included in the mobile vehicle 1. The two mobile vehicles 1 may be connected in parallel through a frame having rigidity.

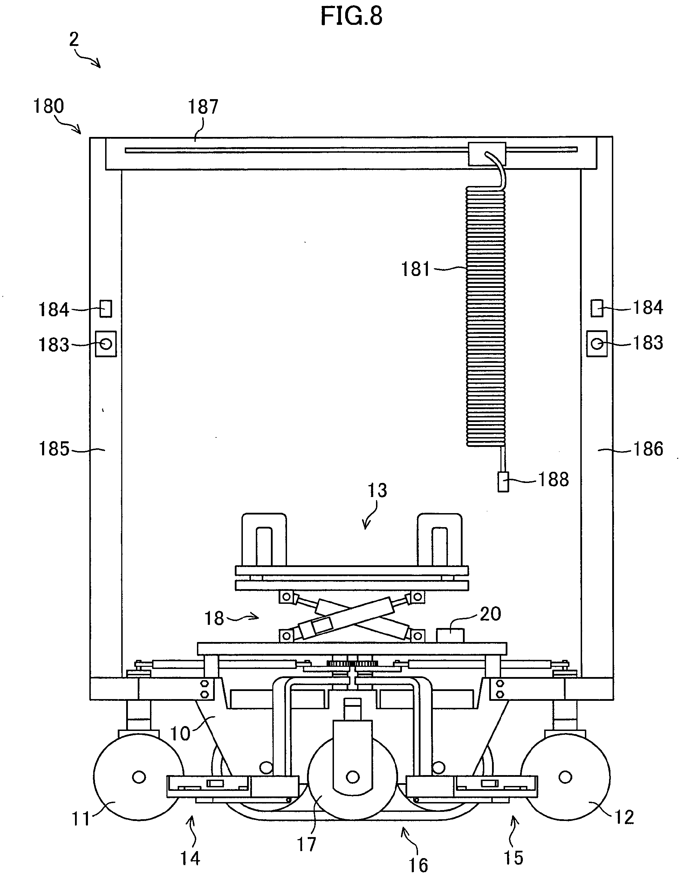

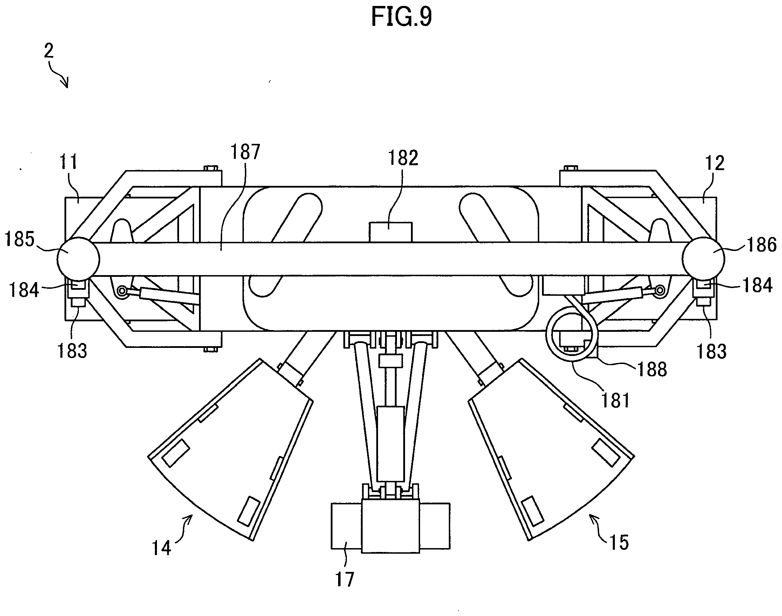

According to the present embodiment, the mobile vehicle 1 may be driven with the power of an external power source. For example, a mobile vehicle 2 illustrated in Figs. 8 and 9 may be provided. Fig. 8 is a schematic side view illustrating an example of the mobile vehicle 2 according to another embodiment. Fig. 9 is a schematic plan view of the mobile vehicle 2 of Fig. 8. Note that, the mobile vehicle 1 provided with a supporting frame 180 makes the mobile vehicle 2. The mobile vehicle 2 has a similar configuration to that of the mobile vehicle 1 except a configuration relating to the supporting frame 180 and various devices attached to the supporting frame 180, and thus the descriptions thereof will be appropriately omitted.

The mobile vehicle 2 includes the supporting frame 180, a cable 181, a connector 182, two image pickup devices 183, and two alarms 184. The supporting frame 180 extends upward from a body frame 10. The cable 181, the connector 182, two image pickup devices 183, and two alarms 184, are attached to the supporting frame 180.

The supporting frame 180 is portal-shaped in side view. The supporting frame 180 includes a cylindrical front frame 185, a cylindrical rear frame 186, and a square-tubular upper frame 187. The front frame 185 extends upward and includes a lower end attached to a front portion of the body frame 10. The rear frame 186 extends upward and includes a lower end attached to a rear portion of the body frame 10. The upper frame 187 extends from an upper end of the front frame 185 to an upper end of the rear frame 186 in a front and rear direction. The upper frame 187 is positioned upper than an upper end of a crop, for example, each upper end of the fences of grapes 71. The cable 181 and the connector 182 are attached to the upper frame 187.

Note that, the supporting frame 180 at least extends upward from the body frame 10 so as to exceed an upper end of the crop. For example, the front frame 185 and the rear frame 186 may be extendable and contractible.

The cable 181 is spirally wound so as to be extendable and contractible. One end of the cable 181 is attached slidably in the front and rear direction, to a left side portion of the upper frame 187. A connector 188 is disposed on the other end of the cable 181. The one end of the cable 181 attached to the upper frame 187, is connected to batteries 19 through an unillustrated current-carrying rail and an unillustrated wire harness, provided inside of the upper frame 187. The connection remains even when the cable 181 slides. The mobile vehicle 2 has the batteries 19 that can be charged with the electric power of an external power source through the cable 181.

The cable 181 at least is able to couple to the external power source and extends from the supporting frame 180 positioned upper than the upper end of the crop. For example, the one end may be fixed to the upper frame 187. The cable 181 may be housed drawable in a winding device including a case, a cylindrical reel provided inside the case, and a coil spring that rotates the reel.

The connector 182 is attached slidably in the front and rear direction, to a right side portion of the upper frame 187, as with the cable 181. The connector 182 is connected to the one end of the cable 181 through an unillustrated current-carrying rail provided inside the upper frame 187. The connection remains even when the connector 182 slides. The mobile vehicle 2 can supply the electric power of the external power source, from the connector 182 to the outside when the cable 181 is connected to the external power source.

Note that, the connector 182 at least is able to supply the electric power to the outside and provided to the supporting frame 180 positioned upper than the upper end of the crop. For example, the connector 182 may be fixed to the upper frame 187. The connector 182 may be able to be connected to the batteries 19, and, in this case, the electric power of the batteries 19 can be supplied to the outside. The connector 182 may be provided at a leading end of a cable, as with the cable 181 extending from the upper frame 187.

Each of the front frame 185 and the rear frame 186 includes the image pickup device 183 and the alarm 184. Each of the image pickup devices 183 picks up an image on the left side of the body frame 10 being a side on which a front step 14 and a rear step 15 are positioned. A control unit 20 controls the image pickup devices 183 and the alarms 184. The mobile vehicle 2 is determines whether an unharvested object is present, based on each image picked up by the image pickup devices 183, and then operates the alarms 184 when determining that the unharvested object is present, so as to notify a worker that the unharvested object is present.

Each of the image pickup devices 183 is, for example, a charge coupled device (CCD) camera. Each of the image pickup devices 183 is positioned at a height close to the hands of the worker in a sitting position. Thus, each of the image pickup devices 183 can pick up an image near a region in which the worker performs harvest operation. When the mobile vehicle 1 moves forward, the image pickup device 183 attached to the rear frame 186 picks up an image on the rear side (a region immediately after harvesting) of the region in which the harvest operation is performed. Meanwhile, when the mobile vehicle 1 moves backward, the image pickup device 183 attached to the front frame 185 picks up an image on the front side (the region immediately after the harvesting) of the region in which the harvest operation is performed.

Note that, each of the image pickup devices 183 is at least able to pick up the image of the region immediately after the harvesting. The arrangement and the number of the image pickup devices 183 can be appropriately designed. For example, each of the image pickup devices 183 may be supported by a member different from the rear frame 186 and the front frame 185.

Here, the control unit 20 includes an unillustrated determination unit. The determination unit performs predetermined processing to the image of the region immediately after the harvesting, picked up by each of the image pickup devices 183 so as to determine whether the unharvested object is present. The determination unit includes, for example, a program. The predetermined processing performed by the determination unit includes filtering processing and statistical processing. The predetermined processing should not be restricted when the processing can at least determine whether the unharvested object is present. For example, the determination unit performs the filtering processing based on the color of the harvested object, to the image picked up by each of the image pickup devices 183, so as to extract a region estimated to be the object to be harvested. Then, the determination unit performs the statistical processing to the size of the region that has been extracted, so as to determine whether the unharvested object is present. Note that, when the mobile vehicle 1 moves forward, the determination unit performs the predetermined processing to the image picked up by the image pickup device 183 attached to the rear frame 186, so as to determine whether the unharvested object is present. Meanwhile, when the mobile vehicle 1 moves backward, the determination unit performs the predetermined processing to the image picked up by the image pickup device 183 attached to the front frame 185, so as to determine whether the unharvested object is present.

The alarms 184 notify the worker that the unharvested object is present. The alarms 184 operate when the determination unit determines that the unharvested object is present. The configuration of each of the alarms 184 should not be restricted. Each of the alarms 184 is configured to notify the worker that the unharvested object is present, by sound or light. A warning sound generating device or a lamp flashing device can be exemplified as the alarms 184. The arrangement and the number of the alarms 184 should not be are not restricted.

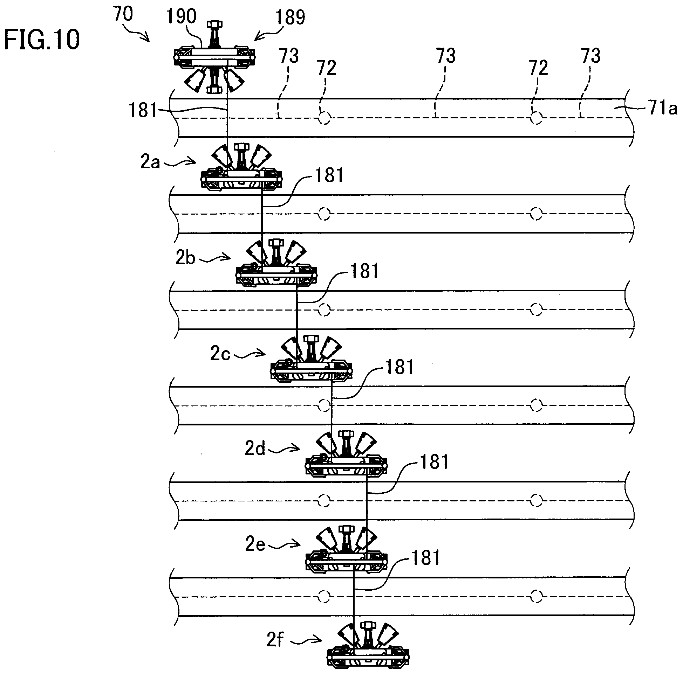

Next, exemplary crop harvest operation using the mobile vehicle 2, will be described. Fig. 10 is a schematic plan view illustrating an example of a harvest operation using the mobile vehicle 2. As with the harvest operation using the mobile vehicle 1, Fig. 10 illustrates the harvest operation in a farm land 70 in which fences of grapes 71 are formed with a plurality of pales 72 and a plurality of ropes 73, in a plurality of rows.

A plurality of the mobile vehicles 2 is used together with a power generation vehicle 189 as an external power source. Note that, Fig. 10 exemplifies the harvest operation with six mobile vehicles 2a, 2b, 2c, 2d, 2e, and 2f. The power generation vehicle 189 includes an engine, a dynamo, and a battery, not illustrated. The power generation vehicle 189 can supply electricity to the outside and also be remotely controlled. Note that, the power generation vehicle 189 has a frame 190 having a similar configuration to that of the supporting frame 180 of the mobile vehicle 2. The frame 190 extends upper than each upper end of the fences of grapes 71 being a crop. The power generation vehicle 189 includes an unillustrated electric power supplying connector at an upper portion of the frame 190. The electric power supplying connector supplies the electric power to the outside. The power generation vehicle 189 is arranged on the outside of an outermost fence of grapes 71a (the upper side in Fig. 10).

The six mobile vehicles 2a, 2b, 2c, 2d, 2e, and 2f each are arranged between the mutually different fences of grapes 71 (furrows). Workers each ride on the mobile vehicles 2a, 2b, 2c, 2d, 2e, and 2f in sitting position, and travel at the mutually different furrows, accompanying with each other so as to harvest the grapes. Note that the power generation vehicle 189 is remotely controlled to travel along the fences of grapes 71a, following the traveling of each of the mobile vehicles 2, by any of the workers, for example, a worker riding on the mobile vehicle 2a.

Here, the six mobile vehicles 2a, 2b, 2c, 2d, 2e, and 2f, and the power generation vehicle 189 are connected to each other through the cables 181 thereof. In more detail, relating to the mobile vehicle 2a positioned at a furrow, adjacent to the power generation vehicle 189, the connector 188 of the cable 181 is connected to the electric power supplying connector of the power generation vehicle 189. Relating to the mobile vehicle 2b positioned at a furrow, adjacent to the mobile vehicle 2a, the connector 188 of the cable 181 is connected to the connector 182 of the mobile vehicle 2a. Similarly, relating to the mobile vehicle 2c positioned at a furrow, adjacent to the mobile vehicle 2b, the connector 188 of the cable 181 is connected to the connector 182 of the mobile vehicle 2b. In each mobile vehicle 2, the connector 188 of the own cable 181 is connected to the connector 182 of the different mobile vehicle 2 positioned at a furrow, adjacent thereto, on the side of the power generation vehicle 189.

Note that, the cables 181 individually extend from the upper frames 187 positioned upper than the upper ends of the fences of grapes 71. The cables 181 are individually connected to the connectors 182 of the different mobile vehicles 2 or the electric power supplying connector of the power generation vehicle 189 over the upper sides of the fences of grapes 71.

The cables 181 of the six mobile vehicles 2a, 2b, 2c, 2d, 2e, and 2f are connected as described above so that the six mobile vehicles 2a, 2b, 2c, 2d, 2e, and 2f can be sequentially connected to the power generation vehicle 189. The batteries 19 of each of the six mobile vehicles 2a, 2b, 2c, 2d, 2e, and 2f are connected in parallel to the battery of the power generation vehicle 189 being the external power source, through the cables 181 and the connectors 182 of the six mobile vehicles 2a, 2b, 2c, 2d, 2e, and 2f. That is, the six mobile vehicles 2a, 2b, 2c, 2d, 2e, and 2f can travel, receiving the supply of the electric power from the power generation vehicle 189.

The cables 181 are connected to the connectors 182 of the different mobile vehicles 2 or the electric power supplying connector of the power generation vehicle 189 over the upper sides of the fences of grapes 71. Thus, the harvest operation is prevented from being interrupted due to the cables 181 caught on the fences of grapes 71 in the traveling, and the efficiency of the harvest operation improves.

The six mobile vehicles 2a, 2b, 2c, 2d, 2e, and 2f have the own cables 181 connected to the different mobile vehicles 2 adjacent thereto, so as to be connected to the power generation vehicle 189, instead of being connected to the power generation vehicle 189 through individual cables. Therefore, the cables 181 of the six mobile vehicles 2a, 2b, 2c, 2d, 2e, and 2f are prevented from winding about each other, and the harvest operation is prevented from being interrupted so that the efficiency of the harvest operation may improve.

The six mobile vehicles 2a, 2b, 2c, 2d, 2e, and 2f travel, accompanying with each other. However, the cables 181 are extendable and contractible and are also attached slidably in the front and rear direction to the upper frames 187. Thus, between the mobile vehicles 2 adjacent to each other, one mobile vehicle 2 can travel, shifting by a predetermined range in the front and rear direction with respect to the other mobile vehicle 2 so that the usability may be satisfactory. Note that, the mobile vehicle 2a having the cable 181 connected to the power generation vehicle 189, can travel, shifting by the predetermined range with respect to the power generation vehicle 189.

For example, the workers who ride on the mobile vehicles 2c, 2d, 2e, and 2f, perform the harvest operation at positions apart from the power generation vehicle 189 being the external power source, being a noise source. Thus, the workers can easily communicate with each other during the harvest operation.

The mobile vehicles 2 each include the image pickup devices 183, the determination unit of the control unit 20, and the alarms 184. The determination unit determines whether the unharvested object is present. The alarms 184 operates and notify the worker that the unharvested object is present when it is determined that the unharvested object is present. Therefore, the workers can prevent the occurrence of the unharvested object, without paying a great deal of attention, so that the efficiency of the harvest operation may improve.

Note that, when clusters 75 of the grapes being objects to be harvested, grow in a two-tiered row as with Fig. 6, the mobile vehicles 2 each may determine at least the unharvested object, in one row included in the two-tiered row. Then, the mobile vehicles 2 each may notify the worker that the unharvested object is present when it is determined that the unharvested object is present. With such a configuration, the operation quantity of each control unit 20 in determining the unharvested object, can be reduced. Additionally, the certainty of the determination can improve. Instead of paying attention to the clusters 75 of the grapes being all the objects to be harvested, the workers each at least pay a great deal of attention to only clusters 75 of the grapes in the other row in which the determination of the unharvested object is not made. Therefore, the burden of each of the workers is reduced and the efficiency of the harvest operation improves.

The determination of whether the unharvested object is present, due to each of the mobile vehicles 2, should not be restricted to one using the image pickup devices 183 and the determination unit of the control unit 20 (an un-harvest determination device). For example, the mobile vehicles 2 each may further include a communication device able to transmit and receive information to and from the outside. Then, an external control unit including the determination unit, may determine whether the unharvested object is present.

Radio frequency identification (RFID) may be used so as to determine whether the unharvested object is present. For such a configuration, tags each including an integrated circuit (IC) and an antenna built in, are individually attached to the clusters 75 of the grapes being the objects to be harvested. The antenna configured to emit a radio wave. Then, antennas each that receive the radio wave emitted from each of the tags, are individually provided to the mobile vehicles 2. The determination of whether a cluster 75 of the unharvested grapes is present, is made based on whether the tag is present. Even with such a configuration, an effect is similarly acquired.

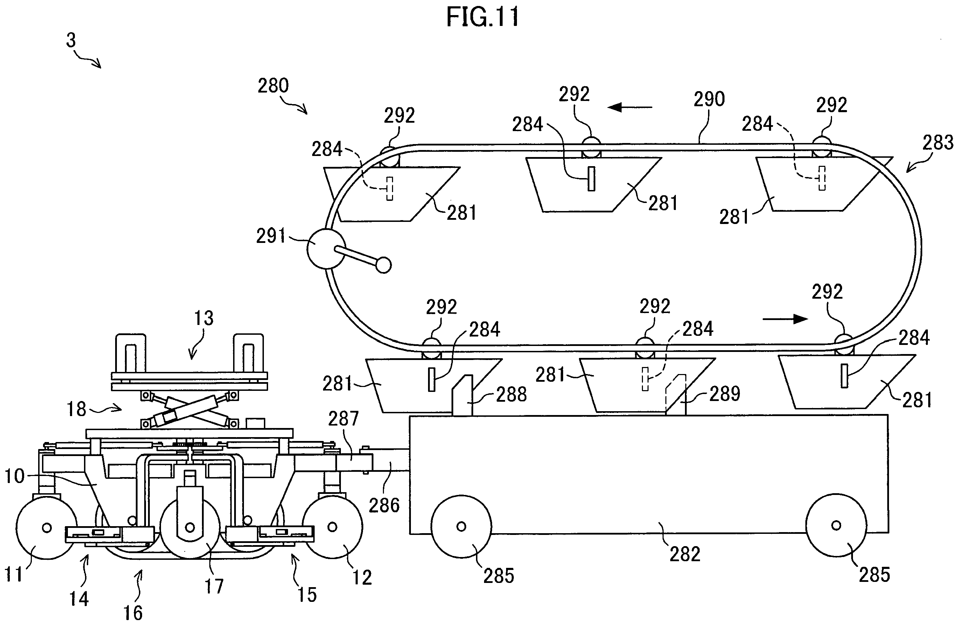

According to the present embodiment, a mobile vehicle 3 including a collecting apparatus 280 that collects harvested objects, may be provided as illustrated in Fig. 11. Fig. 11 is a schematic side view illustrating an example of the mobile vehicle 3 according to another embodiment. An arrow in Fig. 11 indicates a conveying direction of a container 281 of the collecting apparatus 280. Note that the mobile vehicle 3 includes the collecting apparatus 280 connected to the rear portion of the mobile vehicle 1. The mobile vehicle 3 has a similar mode to that of the mobile vehicle 1 except a configuration relating to the collecting apparatus 280, and thus the detailed descriptions thereof will be omitted.

As illustrated in Fig. 11, the mobile vehicle 3 includes the collecting apparatus 280 that is connected to a rear portion of a body frame 10 so as to be towed. The collecting apparatus 280 includes a plurality of the containers 281, a truck 282, and a conveying apparatus 283. A plurality of the containers 281 houses the objects harvested by a worker, respectively. The truck 282 collects the objects to be harvested, housed in the containers 281. The conveying apparatus 283 conveys the containers 281 in order to transfer the harvested objects, housed in the containers 281, to the truck 282. Fig. 11 illustrates the collecting apparatus 280 including six units of the containers 281.

The containers 281 each are a rectangular parallelepiped box having an opening on an upper face. A side face on the rear side of each of the containers 281 slants backward. Each of the containers 281 includes a protrusion 284 protruding outward, on a side face of any of the left and right sides of each container 281. The containers 281 individually hang swingable on supporting bars 292 of the conveying apparatus 283 to be described later.

The truck 282 is formed so as to have a rectangular parallelepiped box having an opening on an upper face. The truck 282 has wheels 285 each at a front portion and a rear portion. The track 282 has also a truck connecting portion 286 protruding forward, on a side face on the front side. The truck connecting portion 286 is connected detachably to a body connecting portion 287 protruding backward from the rear portion of the body frame 10.

Note that, the configuration of the connection between the truck connecting portion 286 and the body connecting portion 287 should not be restricted, and the connection with a locking pin may be provided. A different worker who has not rode on the mobile vehicle 3, may connect and separate the truck connecting portion 286 to and from the body connecting portion 287, at a place apart from the truck connecting portion 286, for example, at a rear portion of the truck 282. For example, the truck connecting portion 286 and the body connecting portion 287 may be connected by using an electromagnet. Then, switches each for operating the electromagnet may be individually provided to the truck connecting portion 286 and the rear portion of the truck 282. With such a configuration, the different worker positioned on the rear side of the truck 282 and the worker that has rode on the mobile vehicle 3, can attach and detach the truck 282 to and from the body frame 10. Therefore, even when traveling is performed through a narrow width furrow, the delivery and reception of the truck 282 can be easily made so that the usability may be satisfactory.

The truck 282 includes a first protrusion 288 protruding upward and a second protrusion 289 protruding upward. The first protrusion 288 is provided at a front portion of the left side face of the truck 282. The second protrusion 289 is provided at a substantially center portion in a front and rear direction of the right side face of the truck 282. The first protrusion 288 corresponds to the protrusions 284 provided on the left side faces of containers 281 (the near side in Fig. 11). When the conveying apparatus 283 conveys the containers 281, the first protrusion 288 contacts the protrusions 284 provided on the left side faces of containers 281, and the containers 281 each swing about the supporting bar 292 as an axis. Meanwhile, the second protrusion 289 corresponds to the protrusions 284 provided on the right side surfaces of containers 281 (the deep side in Fig. 11). When the conveying apparatus 283 conveys the containers 281, the second protrusion 289 contacts the protrusions 284 provided on the right side surfaces of containers 281, and the containers 281 each swing about the supporting bar 292 as an axis.

The conveying apparatus 283 includes a pair of rails 290, an unillustrated chain, an unillustrated sprocket, a rotation handle 291, the round pillared supporting bars 292, and an unillustrated frame. The rails 290 are arranged with a predetermined interval in a left and right direction. Each of the rails 290 has an annular form elongated in the front and rear direction in side view. The chain is arranged along the rails 290. The sprocket engages with the chain. The rotation handle 291 rotates the sprocket. The supporting bars 292 each extends in the left and right direction and have a left end portion and a right end portion supported by the rails 290. The frame supports the rails 290, the chain, the sprocket, and the rotation handle 291. The supporting bars 292 each are attached to the chain through an unillustrated bracket. The frame has wheels and is connected to the rear portion of the body frame 10 so as to be towed. The conveying apparatus 283 is configured to circle the containers 281, supported by the supporting bars 292, in the front and rear direction above the truck 282 by rotating the rotation handle 291.

The containers 281 circle counterclockwise along the rails 290 in side view. In this case, the containers 281 pass near the left hand of the worker who has rode on the mobile vehicle 3, being a hand positioned on the side of the conveying apparatus 283, and also move along the opening of the truck 282. The worker who has rode on the mobile vehicle 3, houses the harvested objects, into the containers 281 conveyed near the left hand. Then, the rotation handle 291 is rotated so that the containers 281 that have housed the harvested objects may be conveyed along the rails 290.

In this case, the containers 281 each including the protrusion 284 provided on the left side face, swing clockwise about the supporting bar 292 as an axis with the protrusion 284 contacting the first protrusion 288 of the truck 282. Then, the harvested objects that have been housed are transferred to a front portion of the truck 282. Meanwhile, the containers 281 each including the protrusion 284 on the right side face, swing clockwise about the supporting bar 292 as an axis with the protrusion 284 contacting the second protrusion 289 of the truck 282. Then, the harvested objects that have been housed are transferred to a substantially center portion of the truck 282.

Here, the containers 281 each including the protrusion 284 provided to the left side face and the containers 281 including the protrusion 284 provided to the right side face, are alternately arranged in a circling direction. Thus, the harvested objects are transferred so as to be sequentially distributed to two places in the truck 282 in the front and rear direction. The harvested objects housed in the containers 281 are transferred for each predetermined quantity from each of the containers 281, in the vicinity of the opening of the truck 282, to the truck 282. Therefore, the mobile vehicle 3 can efficiently transfer the harvested objects, to the truck 282 with the worker not considerably varying an operation posture in a sitting position. Thus, the harvested objects are easily collected and the efficiency of harvest operation improve. The mobile vehicle 3 is able to collect the harvested objects that have been prevented from being blemished, so that the quality of the harvested objects can remains favorable.

Note that, the collecting apparatus 280 should not be restricted to the configuration. For example, the truck 282 may include a plurality of trucks connected in the front and rear direction. The configuration of transferring the harvested objects from each of the containers 281 to the truck 282 may be a configuration of making a transfer to the truck 282 with the bottom of each of the containers 281 opening, instead of a configuration of swinging each of the containers 281 about the supporting bar 292 as an axis. The conveying apparatus 283 at least conveys the containers 281 to circle in the front and rear direction above the truck 282. For example, the conveying apparatus 283 may make a circuit in the front and rear direction in plan view. The collecting apparatus 280 may include a power source that drives the conveying apparatus 283.

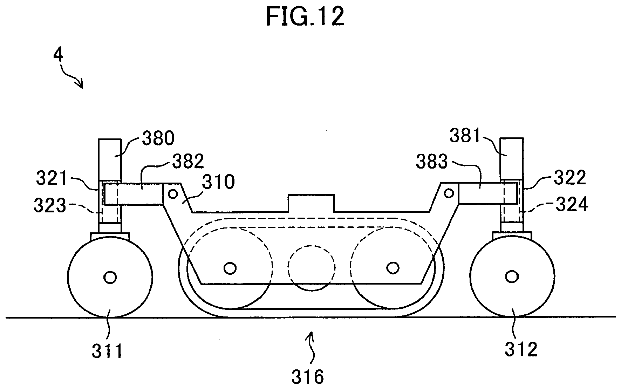

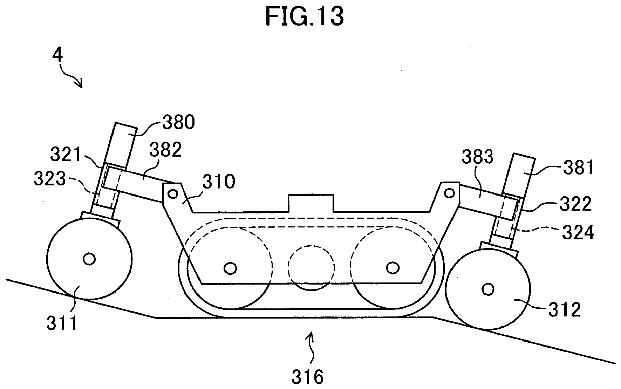

According to the present embodiment, the mobile vehicle 1 may include a front steering wheel 11 and a rear steering wheel 12 swingable in an upper and lower direction. For example, a mobile vehicle 4 illustrated in Figs. 12 and 13 may be provided. Here, Fig. 12 is a schematic side view illustrating an example of the mobile vehicle 4 according to another embodiment. Fig. 13 is a schematic side view illustrating an example of a traveling state of the mobile vehicle 4 according to another embodiment. Note that, Figs. 12 and 13 illustrate a partial configuration of the mobile vehicle 4, particularly, only a suspension system.

The mobile vehicle 4 is different from the mobile vehicle 1 in terms of the configuration of attaching the front steering wheel 11 and the rear steering wheel 12 to the body frame 10. The mobile vehicle 4 includes a seat, a front step, a rear step, an auxiliary wheel, a seat position adjustment device, batteries, and a control unit, not illustrated, as with the mobile vehicle 1, and the descriptions thereof will be appropriately omitted.

The mobile vehicle 4 has a substantially front and rear symmetrical configuration. The mobile vehicle 4 includes a crawler traveling device 316, a body frame 310, a front steering wheel 311, and a rear steering wheel 312. The crawler traveling device 316 being the traveling device, is attached to the body frame 310. The body frame 310 covers the upper side, the left side, and the right sides of the crawler traveling device 316. The front steering wheel 311 is connected swingable in an upper and lower direction about a left and right direction as an axis, to a front portion of the body frame 310. The rear steering wheel 312 is connected swingable in the upper and lower direction about the left and right direction as an axis, to a rear portion of the body frame 310. The mobile vehicle 4 includes also a cylindrical front steering post 321, a cylindrical rear steering post 322, a front steering motor 380, and a rear steering motor 381. A front steering shaft 323 having the front steering wheel 311 at a lower end, is inserted into the front steering post 321. A rear steering shaft 324 having the rear steering wheel 312 at a lower end, is inserted into the rear steering post 322. The front steering motor 380 is connected to an upper end of the front steering shaft 323 and rotates the front steering shaft 323 with respect to the front steering post 321. The rear steering motor 381 is connected to an upper end of the rear steering shaft 324 and rotates the rear steering shaft 324 with respect to the rear steering post 322. The front steering motor 380 and the rear steering motor 381 are fixed to the front steering post 321 and the rear steering post 322, respectively. The front steering motor 380 and the rear steering motor 381 each are an electric motor controlled by the control unit. The mobile vehicle 4 rotates the front steering shaft 323 and the rear steering shaft 324 with the front steering motor 380 and the rear steering motor 381, respectively, so as to be able to steer.

The front steering post 321 is attached to the body frame 310 through a front connecting arm 382. The front connecting arm 382 has one end fixed to the front steering post 321 and the other end connected swingable in the upper and lower direction about the left and right direction as an axis, to the front portion of the body frame 310. The rear steering post 322 is attached to the body frame 310 through a rear connecting arm 383. The rear connecting arm 383 has one end fixed to the rear steering post 322 and the other end connected swingable in the upper and lower direction about the left and right direction as an axis, to the rear portion of the body frame 310.

The mobile vehicle 4 includes an unillustrated energizing mechanism between the front connecting arm 382 or the front steering post 321 and the body frame 310. The energizing mechanism applies force so that the front connecting arm 382 may rotate counterclockwise with respect to the body frame 310 in Fig. 12. As the energizing mechanism, an extendable and contractible rod-shaped damper including a cylinder can be exemplified. Similarly, the mobile vehicle 4 includes an unillustrated energizing mechanism between the rear connecting arm 383 or the rear steering post 322 and the body frame 310. The energizing mechanism applies force so that the rear connecting arm 383 may rotate clockwise with respect to the body frame 310 in Fig. 12. As the energizing mechanism, an extendable and contractible rod-shaped damper including a cylinder can be exemplified.

As illustrated in Fig. 13, the mobile vehicle 4 having such a configuration, can make the front steering wheel 311 and the rear steering wheel 312 follow the variation of a slope of the ground. Thus, the mobile vehicle 4 can securely ground the front steering wheel 311 and the rear steering wheel 312 and additionally can absorb impact in traveling, so that the traveling performance and the comfortable ride may improve.

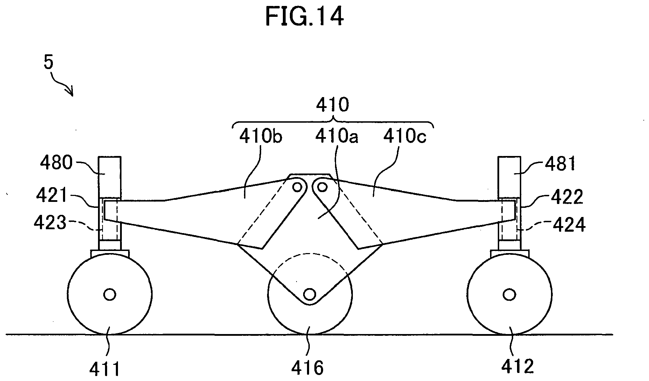

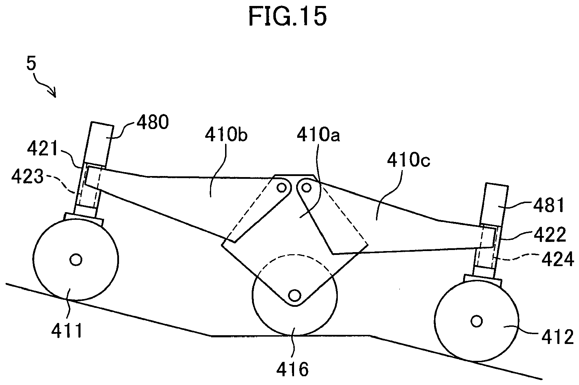

Note that, the mobile vehicle 4 is at least able to swing the front steering wheel 311 and the rear steering wheel 312 in the upper and lower direction. The body frame 310, the front connecting arm 382, the rear connecting arm 383, and the crawler traveling device 316 should not be restricted to the configuration. For example, a similar effect to that of the mobile vehicle 4 is acquired with a configuration of a mobile vehicle 5 illustrated in Figs. 14 and 15. Here, Fig. 14 is a schematic side view illustrating an example of the mobile vehicle 5 according to another embodiment. Fig. 15 is a schematic side view of illustrating an example of a traveling state of the mobile vehicle 5 according to another embodiment. Note that Figs. 14 and 15 illustrate a partial configuration of the mobile vehicle 5, particularly, only a suspension system, as with Figs. 12 and 13.

The mobile vehicle 5 is different from the mobile vehicle 4 in terms of the configuration of the body frame 310 and the traveling device. The mobile vehicle 5 includes a seat, a front step, a rear step, an auxiliary wheel, a seat position adjustment device, batteries, and a control unit, not illustrated, as with the mobile vehicle 4, and thus the descriptions thereof will be appropriately omitted.

The mobile vehicle 5 has a substantially front and rear symmetrical configuration. The mobile vehicle 5 includes a body frame 410, a wheel traveling device 416 being the traveling device, a front steering wheel 411, and a rear steering wheel 412. The body frame 410 includes a main frame 410a, a front sub-frame 410b, and a rear sub-frame 410c. The main frame 410a is positioned at a center portion in a front and rear direction. The wheel traveling device 416 is attached to the main frame 410a. The front sub-frame 410b is positioned on the front side of the main frame 410a. A rear end portion of the front sub-frame 410b is connected swingable in an upper and lower direction about a left and right direction as an axis, to the main frame 410a. The rear sub-frame 410c is positioned on the rear side of the main frame 410a. A front end portion of the rear sub-frame 410c is connected swingable in the upper and lower direction about the left and right direction as an axis, to the main frame 410a.

The front sub-frame 410b includes a cylindrical front steering post 421 at a front end portion. A front steering shaft 423 having the front steering wheel 411 at a lower end, is inserted into the front steering post 421. The rear sub-frame 410c includes a cylindrical rear steering post 422 at a rear end portion. A rear steering shaft 424 having the rear steering wheel 412 at a lower end, is inserted into the rear steering post 422. A front steering motor 480 is provided to the front steering post 421. The front steering motor 480 is connected to an upper end of the front steering shaft 423 and rotates the front steering shaft 423 with respect to the front steering post 421. A rear steering motor 481 is provided to the rear steering post 422. The rear steering motor 481 is connected to an upper end of the rear steering shaft 424 and rotates the rear steering shaft 424 with respect the rear steering post 422. The front steering motor 480 and the rear steering motor 481 each are an electric motor controlled by the control unit. The mobile vehicle 5 rotates the front steering shaft 423 and the rear steering shaft 424 with the front steering motor 480 and the rear steering motor 481, respectively, so as to be able to steer.

The mobile vehicle 5 includes an unillustrated energizing mechanism between the front sub-frame 410b or the front steering post 421 and the main frame 410a. The energizing mechanism applies force so that the front sub-frame 410b may rotate counterclockwise with respect to the main frame 410a in Fig. 14. As the energizing mechanism, an extendable and contractible rod-shaped damper including a cylinder can be exemplified. Similarly, the mobile vehicle 5 includes an unillustrated energizing mechanism between the rear sub-frame 410c or the rear steering post 422 and the main frame 410a. The energizing mechanism apply force so that the rear sub-frame 410c may rotate clockwise with respect to the main frame 410a in Fig. 14. As the energizing mechanism, an extendable and contractible rod-shaped damper including a cylinder can be exemplified.

As with the mobile vehicle 4, as illustrated in Fig. 15, the mobile vehicle 5 having such a configuration, can make the front steering wheel 411 and the rear steering wheel 412 follow the variation of a slope of the ground. Thus, the mobile vehicle 5 can securely ground the front steering wheel 411 and the rear steering wheel 412 and additionally can absorb impact in traveling, so that the traveling performance and the comfortable ride may improve. Note that, the mobile vehicle 5 can more considerably swing the front steering wheel 411 and the rear steering wheel 412 without the total length of the vehicle lengthened, in comparison to the mobile vehicle 4, so that the traveling performance and the comfortable ride may further improve.

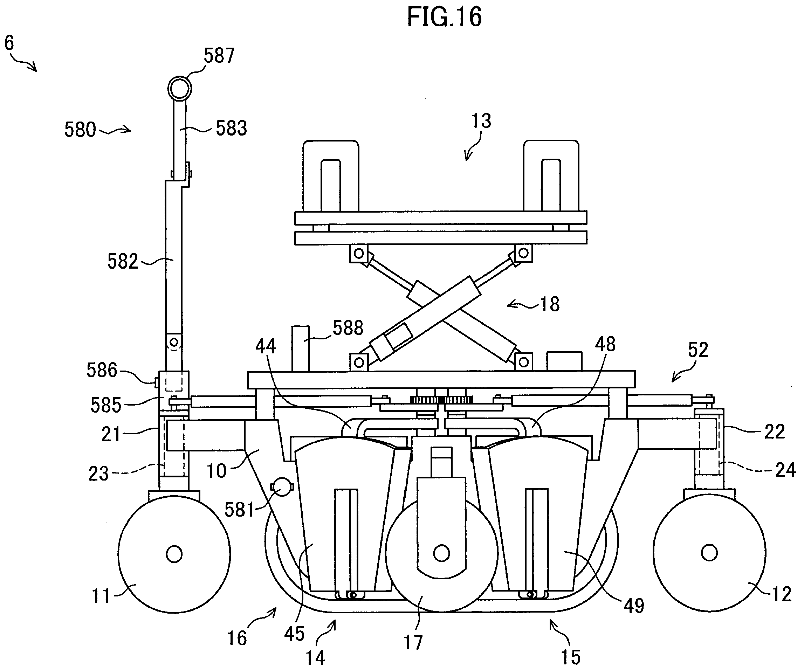

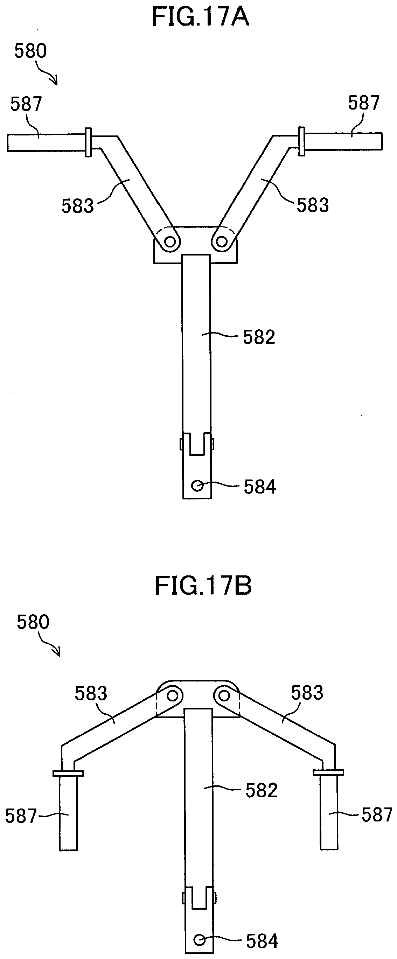

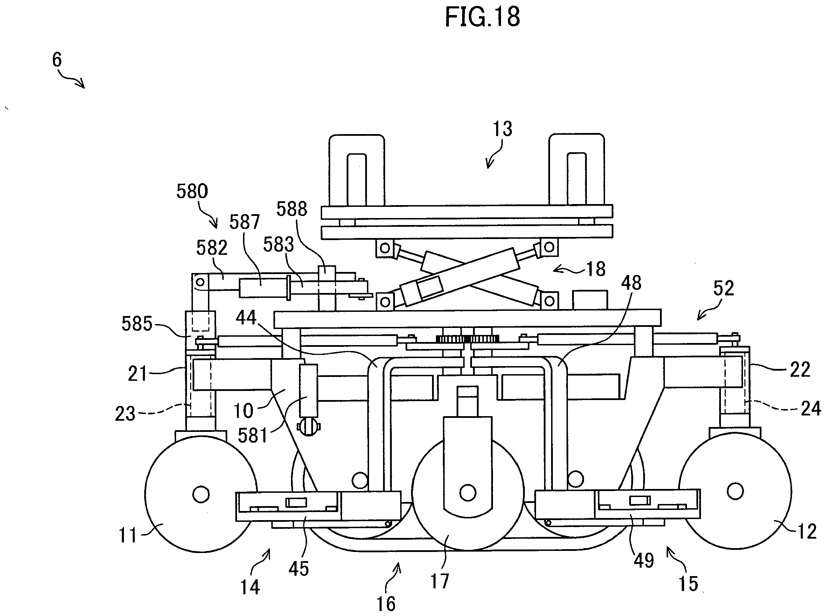

According to the present embodiment, a mobile vehicle 6 including a handle 580 and auxiliary steps 581 as illustrated in Figs. 16 to 18, may be provided. Here, Fig. 16 is a schematic side view illustrating an example of the mobile vehicle 6 according to another embodiment. Figs. 17A and 17B are schematic views illustrating an example of the handle 580 included in the mobile vehicle 6 according to another embodiment. Fig. 17A illustrates a state before the handle levers 583 are folded. Fig. 17B illustrates a state after the handle levers 583 are folded. Fig. 18 is a schematic side view illustrating an example of a state where the handle 580 and the auxiliary steps 581 of the mobile vehicle 6 according to another embodiment have been folded. Note that, the mobile vehicle 6 includes the mobile vehicle 1 further including the handle 580 and the auxiliary steps 581. The mobile vehicle 6 has a similar configuration to that of the mobile vehicle 1 except a configuration relating to the handle 580 and the auxiliary steps 581, and thus the descriptions thereof will be approximately omitted.

The handle 580 includes a round pillared and rod-shaped handle shaft 582 and two units of the handle levers 583. The handle shaft 582 extends in an upper and lower direction. The handle levers 583 each are connected to an upper end of the handle shaft 582 and protrude to both sides of a body frame 10. The handle shaft 582 can be folded at a portion being slightly below a center in the upper and lower direction. Additionally, the handle shaft 582 includes a connecting through hole 584 at a lower end portion. A lower end of the handle shaft 582 is connected detachably to a round pillared steering shaft connecting portion 585 provided protruding upward from an upper end of a front steering shaft 23. In more detail, the lower end of the handle shaft 582 is inserted in a circular recess in a plan view formed on an upper face of the steering shaft connecting portion 585. Then, a locking pin 586 is inserted into an unillustrated through hole formed on a side face on the front side of the steering shaft connecting portion 585 and the through hole 584 of the handle shaft 582, so that the lower end of the handle shaft 582 may be connected to the steering shaft connecting portion 585. The locking pin 586 is pulled out so that the connection between the lower end of the handle shaft 582 and the steering shaft connecting portion 585 may be released. Note that, the configuration of the connection between the lower end of the handle shaft 582 and the steering shaft connecting portion 585 should not be restricted. For example, the connection may be made by screwing, the connection may be made by using a hook or an electromagnet, or the connection may be made by engaging with a spline or by engaging between a key and a key groove. Note that, when the connection is made by, for example, the screwing, the spline, or the key and the key groove, a retaining portion 588 to be described later, retains the handle shaft 582 after the handle shaft 582 is removed from the steering shaft connecting portion 585.

The left and right handle levers 583 each have a grip portion 587 at an end portion. As illustrated in Fig. 17B, the left and right handle levers 583 are foldable at a connecting portion with the handle shaft 582 so as to follow the handle shaft 582, respectively. The grip portion 587 includes an acceleration switch and a brake switch, not illustrated. The left and right grip portions 587 are gripped and the handle 580 are rotated about the handle shaft 582 as an axis so that the front steering shaft 23 may rotate and a front steering wheel 11 may be operated.

The auxiliary steps 581 each are a round pillared and rod-shaped member protruding from both side portions of the body frame 10. The auxiliary steps 581 each are positioned at a front portion of the body frame 10. The auxiliary steps 581 each are foldable upward so as to follow the side portions of the body frame 10, respectively.

The mobile vehicle 6 having such a configuration, is capable of saddle-typed riding in which a worker sits astride a seat 13, facing forward in riding. In detail, a seat position adjustment device 18 lifts the seat 13 up to a predetermined height. Foot plates 45, 49 of a front step 14 and a rear step 15 are rotated upward so as to follow step arms 44, 48, respectively. Then, Foot plates 45, 49 are housed.

Here, the step arm 44 of the front step 14 is prevented from rotating about a front rotate shaft 29 as an axis, with an unillustrated locking pin. Then, the step arm 44 is fixed to the body frame 10, as with the step arm 48 of the rear step 15. A link plate 53 of a steering linkage 52 can rotate about a connecting tube part 47 as an axis because the connection between the connecting tube part 47 and a supporting tube 57 with an unillustrated locking pin, is released, as with a link plate 54. That is, the link plate 53 and the front step 14 do not integrally rotate.

The worker sits astride the seat 13, facing forward, and puts his/her left and right feet on the auxiliary steps 581 on the left and right sides, respectively, so as to ride. The traveling operation of the mobile vehicle 5 is performed through the handle 580, in such a riding position. The worker grips the grip portions 587 of the left and right handle levers 583. The worker operates the front steering wheel 11, by rotating the handle 580 about the handle shaft 582 as an axis in order to rotate the front steering shaft 23. In this case, the front steering shaft 23 is interlocked and connected to a rear steering shaft 24 to operate together through the steering linkage 52 so that a rear steering wheel 12 may be operated together with the front steering wheel 11. In this manner, the mobile vehicle 6 is capable of the saddle-typed riding in which the worker sits astride the seat 13, facing forward in the riding. Thus, the traveling for a purpose other than harvest operation may be facilitated and the usability may be satisfactory.

Meanwhile, as illustrated in Fig. 18, the mobile vehicle 6 is able to fold and house the handle 580 and the auxiliary steps 581 in performing the harvest operation. First, the handle levers 583 of the handle 580 are folded at the connecting portion with the handle shaft 582 so as to follow the handle shaft 582, respectively. Next, the handle shaft 582 is folded backward, at a portion being slightly below the center in the upper and lower direction, so as to be housed along an upper face of a supporting stand 28. Here, the retaining portion 588 that retains the handle shaft 582 that has been folded, is formed on the supporting stand 28. The retaining portion 588 has a vertically sectional shape being a substantially U-shaped. The retaining portion 588 retains the handle shaft 582 that has been folded, to be interposed. Note that, the configuration of the retaining portion 588 should not be restricted. A band including one end fixed to the supporting stand 28, may retain the handle shaft 582.

Next, the locking pin 586 connecting the lower end of the handle shaft 582 and the steering shaft connecting portion 585, is pulled out so that the connection between the handle shaft 582 and the steering shaft connecting portion 585 may be released. The locking pin not illustrated fixing the step arm 44 of the front step 14 to the body frame 10, is removed so that the step arm 44 may be made rotatable about the front rotate shaft 29 as an axis. The connecting tube part 47 and the supporting tube 57 are connected with an unillustrated locking pin so that the link plate 53 of the steering linkage 52 may be made integrally rotatable with the front step 14 about the front rotate shaft 29 as an axis.

Next, the auxiliary steps 581 are folded upward so as to follow the side portions of the body frame 10, respectively. The foot plates 45 and 49 of the front step 14 and the rear step 15 that have been rotated upward and have been housed, are rotated so as to protrude outward from the step arms 44 and 48, respectively. Then, the seat position adjustment device 18 lifts the seat 13 down to a predetermined height. In this manner, the mobile vehicle 6 is able to fold and house the handle 580 and the auxiliary steps 581. Thus, the harvest operation may be prevented from being interrupted by the handle 580 and the auxiliary steps 581 and the usability may be satisfactory.

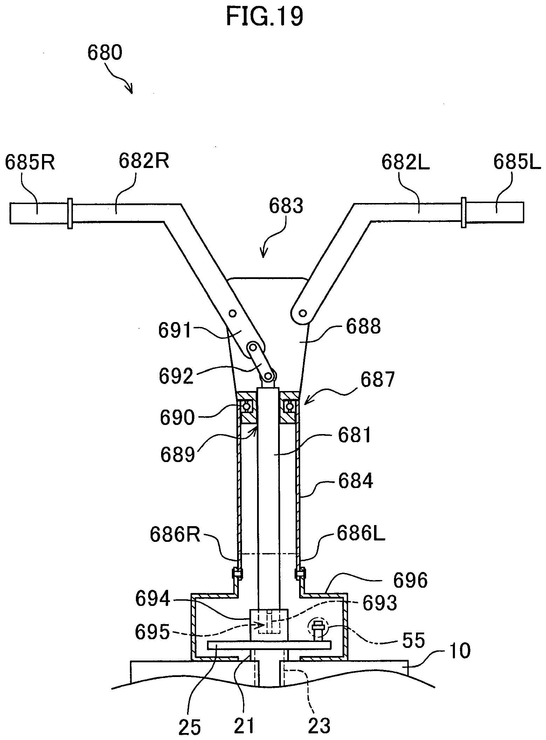

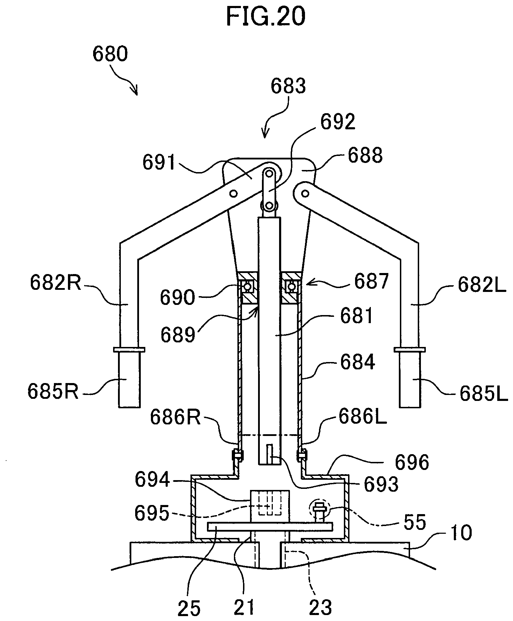

Here, the handle 580 and the auxiliary steps 581 should not be restricted to the configuration. However, in terms of the handling, the handle 580 and the auxiliary steps 581 can be preferably folded and housed as described above, and the handle 580 is more preferably prevented from being separated from the mobile vehicle 6. For example, a handle 680 illustrated in Figs. 19 and 20 may be provided. Here, Fig. 19 is a schematic front view illustrating an example of another handle 680. Fig. 20 is a schematic front view illustrating an example of a state where handle levers of the handle of Fig. 19 have been folded. Note that, in Figs. 19 and 20, a connecting portion 687 of a handle lever connecting mechanism 683, a supporting tube 684, and a casing 696, to be described later, are illustrated in section. The descriptions of a similar configuration to that of the handle 580 will be appropriately omitted.

The handle 680 includes a round pillared and rod-shaped handle shaft 681 extending in an upper and lower direction, a left handle lever 682L, a right handle lever 682R, the handle lever connecting mechanism 683, and the supporting tube 684. The left handle lever 682L includes a grip portion 685L at an end portion, and the right handle lever 682R includes a grip portion 685R at an end portion. The grip portions 685L and 685R include an acceleration switch and a brake switch, not illustrated. The supporting tube 684 is cylindrical and includes a left connecting flange 686L and a right connecting flange 686R protruding downward, at a lower end.

The handle lever connecting mechanism 683 includes a substantially round pillared connecting portion 687 and a platy supporting portion 688 extending upward from an upper portion of the connecting portion 687. The connecting portion 687 includes a through hole 689 and a bearing 690. The handle shaft 681 is inserted into the through hole 689 and supported slidably in the upper and lower direction (an axial direction). The bearing 690 is attached to a circumferential groove formed on the outer circumference. The connecting portion 687 is rotatably attached to an upper end portion of the supporting tube 684 through the bearing 690. Note that, the handle shaft 681 is inserted through the supporting tube 684 and is coaxially positioned. The left handle lever 682L and the right handle lever 682R are rotatably attached to the supporting portion 688 about a front and rear direction as an axis, respectively. Note that, the right handle lever 682R includes an extension portion 691 further extending from a rotating fulcrum. An end portion of the extension portion 691 is connected to an upper end of the handle shaft 681 through a link bar 692. Note that, an unillustrated cover that covers the extension portion 691, the link bar 692, and an upper end portion of the handle shaft 681, is attached to the supporting portion 688.

The handle shaft 681 includes a rectangular key 693 at a lower end portion. The rectangular key 693 protrudes in a diameter direction and has a substantially rectangular shape in a front view. The lower end portion of the handle shaft 681 is connected detachably to a round pillared steering shaft connecting portion 694 provided protruding upward from the upper end of the front steering shaft 23. In more detail, the lower end portion of the handle shaft 681 is inserted into a circular recess in plan view formed on an upper face of the steering shaft connecting portion 694. Here, a key groove 695 extending in the upper and lower direction, corresponding to the key 693 of the handle shaft 681, is formed in the recess of the steering shaft connecting portion 694. The key 693 engages with the key groove 695 so that the handle shaft 681 and the front steering shaft 23 may be connected to each other. Note that, the connection between the handle shaft 681 and the front steering shaft 23 may be made by engaging with a spline.

The left connecting flange 686L and the right connecting flange 686R of the supporting tube 684 are rotatably connected to the casing 696 about a left and right direction as an axis, respectively. The casing 696 cover a flange 25 of the front steering shaft 23 and is fixed to the body frame 10. Note that, the supporting tube 684 at least includes the lower end connected rotatably about the left and right direction as an axis, to the body frame 10, and the configuration of the connection and the mode of the casing 696 can be appropriately designed.

In the handle 680 having such a configuration, the handle shaft 681, the left handle lever 682L, the right handle lever 682R, and the handle lever connecting mechanism 683, are integrally rotatable about the axis of the handle shaft 681 with respect to the supporting tube 684. The left grip portion 685L and the right grip portion 685R are gripped and the handle 680 are rotated about the handle shaft 681 as an axis so that the front steering shaft 23 may rotate and the front steering wheel 11 may be operated.

As illustrated in Fig. 20, the handle 680 has the left handle lever 682L and the right handle lever 682R rotating downward with respect to the supporting portion 688 of the handle lever connecting mechanism 683 so that the left handle lever 682L and the right handle lever 682R can be folded so as to follow the handle shaft 681 (the supporting tube 684). Here, when the right handle lever 682R rotates downward with respect to the supporting portion 688, the handle shaft 681 connected to the right handle lever 682R through the link bar 692 is pulled upward. Then, the lower end of the handle shaft 681 is pulled out of the recess of the steering shaft connecting portion 694 so that the connection to the steering shaft connecting portion 694 may be released. However, the handle 680 is connected to the body frame 10 with the supporting tube 684 and the casing 696 so as not to separate from the mobile vehicle 6. Thus, the usability may be satisfactory. The handle 680 rotates backward with a connecting portion between the supporting tube 684 and the casing 696 as a fulcrum so as to be able to be housed along the upper face of the supporting stand 28. Thus, as with the handle 580, an effect may be similarly acquired.

Meanwhile, when the handle 680 is connected to the front steering shaft 23, the right handle lever 682R rotates upward with respect to the supporting portion 688. Then, the handle shaft 681 is pushed downward so that the lower end portion may be inserted in the recess of the steering shaft connecting portion 694. In this case, the key 693 of the handle shaft 681 engages with the key groove 695 in the recess of the steering shaft connecting portion 694. The orientation of the axial direction of the handle shaft 681 with respect to the front steering shaft 23, is regulated in a specific direction with the key 693 and the key groove 695 so that the handle 680 and the front steering shaft 23 can be easily connected.

Note that, the retaining portion 588 retains the supporting tube 684 or the left handle lever 682L and the right handle lever 682R. The handle shaft 681 may include the upper end connected to the left handle lever 682L through the link bar 692. The handle shaft 681 may include the upper end connected to the left handle lever 682L and the right handle lever 682R through two units of the link bars 692. The handle 680 may include the sliding mechanism that slides the handle shaft 681 upward, provided to the supporting portion 688 of the handle lever connecting mechanism 683.

According to the present embodiment, the seat, the front step, and the rear step may be integrally lifted up and down or inclined with respect to the body frame. The illustration will be omitted and, for example, in the mobile vehicle 1, an end portion positioned on the upper side of the step arm 44 of the front step 14 and an end portion positioned on the upper side of the step arm 48 of the rear step 15, are supported to the lower face of the base portion 32 of the seat 13 rotatably about the upper and lower direction as an axis. Two angle sensors that individually detect the rotation direction and the rotation quantity of each of the front step 14 and the rear step 15 with respect to the base portion 32, are provided to the base portion 32. Note that, the front step 14 and the rear step 15 are made to be prevented, with a locking pin, from rotating with respect to the base portion 32, namely, are made to be fixed to the base portion 32. Then, one of the steps used for the operation of the steering is made rotatable to the base portion 32. One steering motor including an output shaft interlocked and connected to the supporting tube 57 of the link plate 53 or the supporting tube 59 of the link plate 54, is provided. Note that, the output shaft of the steering motor may be interlocked and connected to the gear 58 fixed to the supporting tube 57 or the gear 60 fixed to the supporting tube 59, with gears. Belts or linkages may be used for the interlocking and connecting. Thus, the configuration of the connecting mechanism should not be restricted. The mobile vehicle may have the control unit 20 controlling the one steering motor in response to the detection value of the angle sensors to rotate the front steering shaft 23 and the rear steering shaft 24 so that the steering can be made.

With such a configuration, the seat position adjustment device 18 can integrally lift the seat 13, the front step 14, and the rear step 15 up and down. Thus, the position of the seat 13 can be varied with the sitting position of the worker remaining and the usability is satisfactory. Here, when the seat position adjustment device 18 includes four units of the cylinders 36 arranged extendable and contractible in a vertical direction, the seat 13, the front step 14, and the rear step 15 can be integrally lifted up and down and inclined.

Note that, the configuration in which the seat 13, the front step 14, and the rear step 15 are integrally lifted up and down and inclined, should not be restricted to the above configuration. For example, the above described mobile vehicle may include two steering motors that individually rotate the front steering shaft 23 and the rear steering shaft 24 with respect to the body frame 10, as with the mobile vehicle 4 and the mobile vehicle 5. The control unit 20 may control the two steering motors in response to the detection value of the angle sensors. Even with such a configuration, the seat position adjustment device 18 can integrally lift the seat 13, the front step 14, and the rear step 15 up and down so that an effect may be similarly acquired.

The mobile vehicle capable of integrally lifting the seat 13, the front step 14, and the rear step 15 up and down, can also perform the steering without the steering motors that individually rotate the front steering shaft 23 and the rear steering shaft 24 with respect to the body frame 10. For example, the front step 14 rotatably supported to the lower face of the base portion 32, may be interlocked and connected to the link plate 53 of the steering linkage 52 with an extendable and contractible rod-shaped connecting member having universal joints at both ends. Note that, the link plate 53 of the steering linkage 52 is rotatable about the front rotate shaft 29 as an axis, and the link plate 54 is rotatable about the rear rotate shaft 30 as an axis. In more detail, the universal joint at one end of the connecting member is connected to the end portion positioned on the upper side of the step arm 44 of the front step 14, and the universal joint at the other end of the connecting member is connected to a portion of the link plate 53 rotatably supported to the front rotate shaft 29. The front step 14 rotates with respect to the base portion 32 so that the link plate 53 may rotate about the front rotate shaft 29 as an axis.

As the configuration of the extendable and contractible rod-shaped connecting member, a configuration including a cylindrical first tube member and a second tube member being able to be inserted into the first tube member, can be exemplified. The cylindrical first tube member has a groove extending in an axial direction on an inner circumferential face. The second tube member has a protrusion extending in the axial direction on an outer circumferential face and engaging with the groove of the first tube member. Note that, when such a configuration is provided, the mobile vehicle includes no supporting stand 28, and ends positioned on the lower sides of the two electric cylinders 36 and 36 of the seat position adjustment device 18, are connected to the upper face of the body frame 10. The control unit 20 is arranged on the upper face of the body frame 10. Even with such a configuration, the seat position adjustment device 18 can integrally lift the seat 13, the front step 14, and the rear step 15 up and down so that an effect may be similarly acquired.

The mobile vehicle according to the present embodiment should not be restricted to one operated by the worker, and may be capable of autonomous traveling along a predetermined path. The illustration will be omitted and, for example, the mobile vehicle may be capable of the autonomous traveling, using a global navigation satellite system (GNSS). As such a configuration, for example, the mobile vehicle 4 further includes a GNSS receiving device, traveling path information and an autonomous traveling program, and sensors. The GNSS receiving device receives a radio wave signal from a GNSS satellite. The traveling path information and the autonomous traveling program is used for the autonomous traveling of the mobile vehicle 4 and have been previously stored in the storage unit of the control unit 20. The sensors detect information necessary for the autonomous traveling of the mobile vehicle 4, such as the traveling speed and the three-dimensional position of the mobile vehicle 4. The control unit 20 calculates the position of the mobile vehicle 4 based on the radio wave signal from the GNSS satellite, and calculates the deviation between the position that has been calculated and the traveling path. Then, The control unit 20 controls the operations of the crawler traveling device 316, the front steering motor 380, and the rear steering motor 381 so as to make the mobile vehicle travel along the travel path. Thus, the mobile vehicle 4 can travel autonomously along the path. Note that, the configuration of the mobile vehicle 4 that performs the autonomous traveling, should not be restricted to the above configuration. For example, the autonomous traveling may be performed along a guide path wire provided in the ground in a field.

In this manner, when the autonomous traveling can be performed, the use application of the mobile vehicle expands and the mobile vehicle can be used as a vehicle that conveys the harvested objects so that the usability may be satisfactory. The burden of the worker who operates the mobile vehicle is reduced so that the work efficiency may improve.

The mobile vehicles 1, 2, 3, 4, 5, and 6 according to the present embodiment that have been described above, can be arbitrarily combined in the scope of non-contradiction. For example, the mobile vehicle 6 may include the collecting apparatus 280 of the mobile vehicle 3 that collects the harvested objects.

### Industrial Applicability

The mobile vehicle according to the present invention, can be applied to mobile vehicles used for the harvest operation of fruits, such as grapes, pears, strawberries, tomatoes, or cherries, as crops in any fields including rice fields, vegetable fields, and orchards. Particularly, the mobile vehicle is useful to the harvest operation of fruits being crops planted in rows. The mobile vehicle according to the present invention, can travel through a relatively narrow path so as to be useful to line work in a factory.

### Reference Sings List

- 1, 2, 3, 4, 5, 6: mobile vehicle
- 10, 310, 410: body frame
- 11: front steering wheel (steering wheel)
- 12: rear steering wheel (steering wheel)
- 13: seat
- 14: front step (step)
- 15: rear step (step)
- 16, 316: crawler traveling device (traveling device)
- 17: auxiliary wheel
- 18: seat position adjustment device
- 19: battery (power source)
- 20: control unit
- 23, 323, 423: front steering shaft
- 24, 324, 424: rear steering shaft
- 31a: seating face
- 33: seat post
- 34: load sensor
- 35: grip
- 38: damper (connecting member)
- 180: supporting frame
- 181: cable
- 182: connector
- 183: image pickup device (un-harvest determination device)
- 184: alarm
- 280: collecting apparatus
- 281: container
- 282: truck
- 283: conveying apparatus
- 285: wheel
- 416: wheel traveling device (traveling device)
- 580, 680: handle
- 581: auxiliary step
- 582, 681: handle shaft
- 583, 682: handle lever
- 588: retaining portion

## Claims

1. A mobile vehicle (1; 2; 3; 4; 5; 6) comprising:
a body frame (10; 310; 410);
two steering wheels (11, 12);
a seat (13); and
two steps (14, 15) on which a worker individually puts left and right feet of the worker, the two steps (14, 15) being provided on one side of the body frame (10; 310; 410),
**characterized in that**
one of the steering wheels (11, 12) is provided to a front portion of the body frame (10; 310; 410) and the other is provided to a rear portion,
the seat (13) is provided to an upper portion of the body frame (10; 310; 410) between the steering wheels (11, 12), and
one of the two steps (14, 15) is configured to operate the steering wheels (11, 12).

2. The mobile vehicle (1; 2; 3; 4; 5; 6) according to claim 1, further comprising:
a power source (19); and
a traveling device (16; 316; 416) configured to drive with power of the power source (19), wherein
the traveling device (16; 316; 416) is provided to the body frame (10; 310; 410) between the steering wheels (11, 12).

3. The mobile vehicle (1; 2; 3; 4; 5; 6) according to claim 1 or 2, further comprising:
an auxiliary wheel (17) on at least one of sides of the body frame (10; 310; 410).

4. The mobile vehicle (1; 2; 3; 4; 5; 6) according to claim 3, wherein
the auxiliary wheel (17) is attached to the body frame (10; 310; 410) through a linkage, and
the linkage includes an extendable and contractible connecting member (38) having one end connected to the body frame (10; 310; 410) and the other end connected to the auxiliary wheel (17).

5. The mobile vehicle (1; 2; 3; 4; 5; 6) according to any one of claims 1 to 4, wherein
at least one of the two steps (14, 15) is configured to perform a speed change operation of the mobile vehicle (1; 2; 3; 4; 5; 6).

6. The mobile vehicle (1; 2; 3; 4; 5; 6) according to any one of claims 1 to 5, wherein
the two steps (14, 15) are switchable such that one of the two steps (14, 15) operates the steering wheel (11, 12) .

7. The mobile vehicle (1; 2; 3; 4; 5; 6) according to any one of claims 1 to 6, further comprising:
a seat position adjustment device (18) configured to lift the seat (13) up and down or incline the seat (13) with respect to the body frame (10; 310; 410).

8. The mobile vehicle (1; 2; 3; 4; 5; 6) according to claim 7, further comprising:
a load sensor (34) configured to detect the weight shift of the worker, wherein
the seat position adjustment device (18) is configured to operate based on the detection value of the load sensor (34).

9. The mobile vehicle (1; 2; 3; 4; 5; 6) according to any one of claims 1 to 8, further comprising:
a seat post (33) including a grip (35) and protruding from a seating face (31a) of the seat (13), wherein
the seat post (33) is configured to retain buttocks of the worker to be interposed in riding.

10. The mobile vehicle (1; 2; 3; 4; 5; 6) according to claim 9, wherein
the seat post (33) is detachably attached to the seat (13) .

11. The mobile vehicle (2) according to any one of claims 1 to 10, further comprising:
a supporting frame (180);
a cable (181) being connectable to an external power source; and
a connector (182) being able to supply power to the outside, wherein
the supporting frame (180) extends upward from the body frame (10) so as to exceed an upper end of a crop,
the cable (181) extends from an upper portion of the supporting frame (180), and
the connector (182) is provided to the upper portion of the supporting frame (180).

12. The mobile vehicle (2) according to any one of claims 1 to 11, further comprising:
an un-harvest determination device (183) configured to determine whether an unharvested object is present; and
an alarm (184), wherein
the alarm (184) is configured to operate when the un-harvest determination device (183) determines that the unharvested object is present.

13. The mobile vehicle (3) according to any one of claims 1 to 12, further comprising:
a collecting apparatus (280) connected to the body frame (10) and configured to collect harvested objects, wherein
the collecting apparatus (280) includes a plurality of containers (281), a truck (282) having wheels, and a conveying apparatus (283),
the plurality of containers (281) is configured to house the harvested objects by the worker,
the truck (282) is connected detachably to the body frame (10) and configured to collect the harvested objects that have been housed in the containers (281), and
the conveying apparatus (283) is configured to convey the containers (281) to circle in a front and rear direction above the truck (282) and to transfer the harvested objects that have been housed in the containers (281) to the truck (282).

14. The mobile vehicle (6) according to any one of claims 1 to 13, further comprising:
a handle (580, 680); and
two auxiliary steps (581), wherein
the handle (580, 680) is detachably connected to a steering shaft (23) of the steering wheel (11) provided to a front portion of the body frame (10) and configured to operate the steering wheel (11, 12), and
the two auxiliary steps (581) protrude outward from both side portions of the body frame (10), respectively.

15. The mobile vehicle (6) according to claim 14, wherein
the handle (580, 680) includes a foldable rod-shaped handle shaft (582, 681) and two handle levers (583, 682),
the handle shaft (582, 681) includes one end detachably connected to the steering shaft (23) of the steering wheel (11) provided to the front portion of the body frame (10),
the two handle levers (583, 682) are connected to the other end of the handle shaft (582, 681) and protrude to both sides of the body frame (10), respectively,
the two handle levers (583, 682) are foldable along the handle shaft (582, 681),
the two auxiliary steps (581) are foldable along the side portions of the body frame (10), respectively, and
the body frame (10) includes a retaining portion (588) that retains the handle shaft (582, 681) that has been folded.

16. The mobile vehicle (1, 2, 3, 4, 5, 6) according to any one of claims 1 to 15, wherein
the mobile vehicle (1, 2, 3, 4, 5, 6) is configured to travel autonomously or to be controlled remotely.

## Patentansprüche

1. Mobiles Fahrzeug (1; 2; 3; 4; 5; 6), umfassend:
einen Karosserierahmen (10; 310; 410);
zwei Lenkräder (11, 12);
einen Sitz (13); und
zwei Stufen (14, 15), auf weichen ein Arbeiter individuell einen linken und einen rechten Fuß des Arbeiters legt, wobei die zwei Stufen (14, 15) auf einer Seite des Karosserierahmens (10; 310; 410) vorgesehen sind,
**dadurch gekennzeichnet, dass**
eines der Lenkräder (11, 12) an einem vorderen Teilbereich des Karosserierahmens (10; 310; 410) vorgesehen ist und das andere an einem hinteren Teilbereich vorgesehen ist,
der Sitz (13) an einem oberen Teilbereich des Karosserierahmens (10; 310; 410) zwischen den Lenkrädern (11, 12) vorgesehen ist, und eine der zwei Stufen (14, 15) konfiguriert ist, um die Lenkräder (11, 12) zu betätigen.

2. Mobiles Fahrzeug (1; 2; 3; 4; 5; 6) nach Anspruch 1, weiterhin umfassend:
eine Energiequelle (19); und
eine verfahrbare Vorrichtung (16; 316; 416), die konfiguriert ist, um mit Energie der Energiequelle (19) zu fahren, wobei
die verfahrbare Vorrichtung (16; 316; 416) am Karosserierahmen (10; 310; 410) zwischen den Lenkrädern (11, 12) vorgesehen ist.

3. Mobiles Fahrzeug (1; 2; 3; 4; 5; 6) nach Anspruch 1 oder 2, weiterhin umfassend:
ein Nebenrad (17) auf wenigstens einer der Seiten des Karosserierahmens (10; 310; 410).

4. Mobiles Fahrzeug (1; 2; 3; 4; 5; 6) nach Anspruch 3, wobei
das Nebenrad (17) am Karosserierahmen (10; 310; 410) durch eine Koppelung angebracht ist, und
die Koppelung ein ausfahrbares und zusammenziehbares Verbindungselement (38) enthält, von welchem ein Ende mit dem Karosserierahmen (10; 310; 410) verbunden ist und das andere Ende mit dem Nebenrad (17) verbunden ist.

5. Mobiles Fahrzeug (1; 2; 3; 4; 5; 6) nach einem der Ansprüche 1 bis 4, wobei
wenigstens eine der zwei Stufen (14, 15) konfiguriert ist, um eine Geschwindigkeitsänderungsoperation des mobilen Fahrzeugs (1; 2; 3; 4; 5; 6) durchzuführen.

6. Mobiles Fahrzeug (1; 2; 3; 4; 5; 6) nach einem der Ansprüche 1 bis 5, wobei
die zwei Stufen (14, 15) so umschaltbar sind, dass eine der zwei Stufen (14, 15) das Lenkrad (11, 12) betätigt.

7. Mobiles Fahrzeug (1; 2; 3; 4; 5; 6) nach einem der Ansprüche 1 bis 6, weiterhin umfassend:
eine Sitzposition-Einstellvorrichtung (18), die konfiguriert ist, um, in Bezug auf den Karosserierahmen (10; 310; 410), den Sitz (13) nach oben und nach unten zu heben oder den Sitz (13) zu neigen.

8. Mobiles Fahrzeug (1; 2; 3; 4; 5; 6) nach Anspruch 7, weiterhin umfassend:
einen Lastsensor (34), der konfiguriert ist, um die Gewichtsverlagerung des Arbeiters zu erfassen, wobei
die Sitzposition-Einstellvorrichtung (18) konfiguriert ist, um basierend auf dem Erfassungswert des Lastsensors (34) zu arbeiten.

9. Mobiles Fahrzeug (1; 2; 3; 4; 5; 6) nach einem der Ansprüche 1 bis 8, weiterhin umfassend:
eine Sitzstütze (33), die einen Griff (35) enthält und von der Sitzfläche (31a) des Sitzes (13) vorsteht, wobei
die Sitzstütze (33) konfiguriert ist, um Gesäßbacken des Arbeiters derart zu sichern, dass sie beim Sitzen in Reitstellung dazwischen angeordnet sind.

10. Mobiles Fahrzeug (1; 2; 3; 4; 5; 6) nach Anspruch 9, wobei die Sitzstütze (33) am Sitz (13) abnehmbar angebracht ist.

11. Mobiles Fahrzeug (2) nach einem der Ansprüche 1 bis 10, weiterhin umfassend:
einen Tragrahmen (180);
ein Kabel (181), das mit einer externen Energiequelle verbindbar ist; und
ein Verbindungsstück (182), das Energie nach außen führen kann, wobei
der Tragrahmen (180) sich vom Karosserierahmen (10) derart nach oben erstreckt, dass er über ein oberes Ende einer Pflanze hinausgeht,
das Kabel (181) sich von einem oberen Teilbereich des Tragrahmens (180) erstreckt, und
das Verbindungsstück (182) am oberen Teilbereich des Tragrahmens (180) vorgesehen ist.

12. Mobiles Fahrzeug (2) nach einem der Ansprüche 1 bis 11, weiterhin umfassend:
eine Bestimmungsvorrichtung (183) für kein Ernten, die konfiguriert ist, um zu bestimmen, ob ein nicht geerntetes Objekt vorhanden ist; und
einen Alarm (184), wobei
der Alarm (184) konfiguriert ist, um zu arbeiten, wenn die Bestimmungsvorrichtung (183) für kein Ernten bestimmt, das das nicht geerntete Objekt vorhanden ist.

13. Mobiles Fahrzeug (3) nach einem der Ansprüche 1 bis 12, weiterhin umfassend:
eine Sammelvorrichtung (280), die mit dem Karosserierahmen (10) verbunden ist und konfiguriert ist, um geerntete Objekte zu sammeln, wobei
die Sammelvorrichtung (280) eine Vielzahl von Behältern (281), einen Transporter (282) mit Rädern und eine Fördervorrichtung (283) enthält,
die Vielzahl von Behältern (281) konfiguriert ist, um die geernteten Objekte durch den Arbeiter unterzubringen,
der Transporter (282) abnehmbar mit dem Karosserierahmen (10) verbunden ist und konfiguriert ist, um die geernteten Objekte zu sammeln, die in den Behältern (281) untergebracht sind, und
die Fördervorrichtung (283) konfiguriert ist, um die Behälter (281) so zu fördern, dass sie in einer Richtung nach vorn und nach hinten über dem Transporter (282) kreisen und die geernteten Objekte, die in den Behältern (281) untergebracht worden sind, zum Transporter (282) zu transferieren.

14. Mobiles Fahrzeug (6) nach einem der Ansprüche 1 bis 13, weiterhin umfassend:
einen Handgriff (580, 680); und
zwei Hilfsstufen (581), wobei
der Handgriff (580, 680) abnehmbar mit einer Lenkwelle (23) des Lenkrads (11) verbunden ist, die an einem vorderen Teilbereich des Karosserierahmens (10) vorgesehen ist und konfiguriert ist, um das Lenkrad (11, 12) zu betätigen, und
die zwei Hilfsstufen (581) jeweils von beiden seitlichen Teilbereichen des Karosserierahmens (10) nach außen vorstehen.

15. Mobiles Fahrzeug (6) nach Anspruch 14, wobei
der Handgriff (580, 680) eine faltbare stabförmige Handgriffwelle (582, 681) und zwei Handgriffhebel (583, 682) enthält,
die Handgriffwelle (582, 681) ein Ende enthält, das abnehmbar mit der Lenkwelle (23) des Lenkrads (11) verbunden ist, das am vorderen Teilbereich des Karosserierahmens (10) vorgesehen ist,
die zwei Handgriffhebel (583, 682) mit dem anderen Ende der Handgriffwelle (582, 681) verbunden sind und jeweils zu beiden Seiten des Karosserierahmens (10) vorstehen,
die zwei Handgriffhebel (583, 682) entlang der Handgriffwelle (582, 681) faltbar sind,
die zwei Hilfsstufen (581) jeweils entlang den seitlichen Teilbereichen des Karosserierahmens (10) faltbar sind, und
der Karosserierahmen (10) einen Zurückhalteteilbereich (588) enthält, der die Handgriffwelle (582, 681) zurückhält, die gefaltet worden ist.

16. Mobiles Fahrzeug (1, 2, 3, 4, 5, 6) nach einem der Ansprüche 1 bis 15, wobei
das mobile Fahrzeug (1, 2, 3, 4, 5, 6) konfiguriert ist, um autonom zu fahren oder fernbedient zu werden.

## Revendications

1. Véhicule mobile (1, 2, 3, 4, 5, 6) comprenant :
un châssis-carrosserie (10, 310, 410),
deux roues directrices (11, 12),
un siège (13) et
deux repose-pieds (14, 15), sur lesquelles un travailleur pose individuellement le pied gauche et le pied droit, les deux repose-pieds (14, 15) étant prévus, sur un côté du châssis-carrosserie (10, 310, 410),
**caractérisé en ce que**
une des roues directrices (11, 12) est prévue sur une partie avant du châssis-carrosserie (10, 310, 410) et l'autre est prévue sur une partie arrière,
le siège (13) est prévu sur une partie supérieure du châssis-carrosserie (10, 310, 410) entre les roues directrices (11, 12),
un des deux repose-pieds (14, 15) est configuré pour actionner les roues directrices (11, 12).

2. Véhicule mobile (1, 2, 3, 4, 5, 6) suivant la revendication 1, le véhicule comprenant en plus :
une source d'énergie (19), et
un dispositif de déplacement (16, 316, 416) configuré pour se déplacer avec l'énergie de la source d'énergie (19),
le dispositif de déplacement (16, 316, 416) étant disposé sur le châssis-carrosserie (10, 310, 410), entre les roues directrices (11,12).

3. Véhicule mobile (123456) suivant la revendication 1 ou 2, comprenant en plus :
une roue auxiliaire (17) sur au moins un des côtés du châssis-carrosserie (10, 310,410).

4. Véhicule mobile (1, 2, 3, 4, 5, 6) suivant la revendication 3, dans lequel
la roue auxiliaire (17) est fixée au châssis-carrosserie (10, 310, 410, par l'intermédiaire d'une articulation, et
l'articulation inclut un élément de liaison extensible et rétractable (38), dont une extrémité est reliée au châssis-carrosserie (10, 310, 410) et l'autre extrémité est reliée à la roue auxiliaire (17).

5. Véhicule mobile (1, 2, 3, 4, 5, 6) suivant une des revendications 1 à 4, dans lequel
au moins un des deux repose-pieds (14, 15) est configuré pour exécuter un changement de vitesse du véhicule mobile (1, 2, 3, 4, 5, 6).

6. Véhicule mobile (1, 2, 3, 4, 5, 6) suivant une des revendications 1 à 5, dans lequel les deux repose-pieds (14, 15) sont débrayables de manière qu'un des deux repose-pieds (14, 15) actionne la roue directrice (11, 12).

7. Véhicule mobile (1, 2, 3, 4, 5, 6) suivant une des revendications 1 à 6, comprenant en plus :
un dispositif d'ajustement de position de siège (18) configuré pour relever et abaisser le siège (13) ou incliner le siège (13) par rapport au châssis-carrosserie (10, 310,410).

8. Véhicule mobile (1, 2, 3, 4, 5, 6) suivant une des revendications 1 à 6, comprenant en plus :
un capteur de charge (34) configuré pour détecter le transfert de poids du travailleur,
le dispositif d'ajustement de position de siège (18) étant configuré pour fonctionner sur la base de la valeur de détection du capteur de charge (34).

9. Véhicule mobile (1, 2, 3, 4, 5, 6) suivant une des revendications 1 à 8, comprenant en plus :
un montant de siège (33) incluant une poignée (35) et faisant saillie d'une face d'assise (31a) du siège (13),
le montant de siège (33) étant configuré pour retenir les fesses du travailleur destiné à être interposé à califourchon.

10. Véhicule mobile (1, 2, 3, 4, 5, 6) suivant la revendication 9, dans lequel le montant de siège (33) est fixé au siège (13) de manière amovible.

11. Véhicule mobile (2) suivant une des revendications 1 à 10, comprenant en plus :
un cadre de support (180),
un câble (181) pouvant être relié à une source d'énergie externe, et
un connecteur (182) capable de fournir de l'énergie à l'extérieur,
le cadre de support (180) s'étendant vers le haut à partir du châssis-carrosserie (10), de manière à dépasser une extrémité supérieure d'une culture,
le câble (181) s'étendant d'une partie supérieure du cadre de support (180), et
le connecteur (182) étant prévu sur la partie supérieure du cadre de support (180).

12. Véhicule mobile (2) suivant une des revendications 1 à 11, comprenant en plus :
un dispositif de détermination d'objet non récolté (183) configuré pour déterminer si un objet non récolté est présent, et
une alarme (184),
l'alarme (184) étant configurée pour fonctionner lorsque le dispositif de détermination d'objet non récolté (183) détermine que l'objet non récolté est présent.

13. Véhicule mobile (3) suivant une des revendications 1 à 12, comprenant en plus :
un appareil de collecte (280) relié au châssis-carrosserie (10) et configuré pour collecter des objets récoltés,
l'appareil de collecte (280) incluant une pluralité de conteneurs (281), un camion (282) ayant des roues, et un équipement de manutention (283),
la pluralité des conteneurs (281) étant configurés de manière que les objets récoltés peuvent y être logés par le travailleur,
le camion (282) étant relié de façon amovible au châssis-carrosserie (10) et configuré pour collecter les objets récoltés qui ont été logés dans les conteneurs (281), et
l'équipement de manutention (283) étant configuré pour manutentionner les réservoirs (281) de manière qu'ils tournent dans une direction avant et arrière au-dessus du camion (282) et à transférer au camion (282) les objets récoltés, qui ont été logés dans les conteneurs (281).

14. Véhicule mobile (6) suivant une des revendications 1 à 13, comprenant en plus :
une manette (580, 680) et deux repose-pieds auxiliaires (581),
la manette (580, 680) étant reliée de façon amovible à un arbre de direction (23) de la roue directrice (11) prévu sur une partie avant du châssis-carrosserie (10) et configuré pour actionner la roue directrice (11, 12), et
les deux repose-pieds auxiliaires (581) font respectivement saillie des deux parties latérales du châssis-carrosserie (10) vers l'extérieur.

15. Véhicule mobile (6) suivant la revendication 14, véhicule, dans lequel
la manette (580, 680) inclut une tige de manette pliable (582, 681) et deux leviers de manette (583, 682),
la tige de manette (582, 681) inclut une extrémité qui est reliée de manière amovible à l'arbre de direction (23) de la roue directrice (11) prévu sur la partie avant du châssis-carrosserie (10),
les deux leviers de manette (583, 682) sont reliés à l'autre extrémité de la tige de manette (582, 681) et font respectivement saillie des deux côtés du châssis-carrosserie (10),
les deux leviers de manette (583, 682) sont pliables le long de la tige de manette (582, 681),
les deux repose-pieds auxiliaires (581) sont respectivement pliables le long des parties latérales du châssis-carrosserie (10), et
le châssis-carrosserie (10) inclut une partie de retenue (588) qui retient la tige de manette (582, 681) qui a été pliée.

16. Véhicule mobile (1, 2, 3, 4, 5, 6) suivant une des revendications 1 à 15, véhicule, dans lequel
le véhicule mobile (1, 2, 3, 4, 5, 6) est configuré pour se déplacer de manière autonome ou pour être commandé à distance.
